(19) Europäisches Patentamt / European Patent Office / Office européen des brevets

(11) **EP 3 293 891 B1**

(12) **EUROPEAN PATENT SPECIFICATION**

(45) Date of publication and mention
of the grant of the patent:
**27.02.2019   Bulletin 2019/09**

(51) Int Cl.:
**H04B 7/185** (2006.01)      **H04B 7/204** (2006.01)

(21) Application number: **16306157.5**

(22) Date of filing: **13.09.2016**

(54) **METHOD FOR MANAGING AN INTEGRATED SATELLITE-TERRESTRIAL NETWORK AND DEVICE FOR IMPLEMENTING THE SAME**

VERFAHREN ZUR VERWALTUNG EINES INTEGRIERTEN SATELLITENGESTÜTZTEN-TERRESTRISCHEN NETZWERKS UND VORRICHTUNG ZUR IMPLEMENTIERUNG DAVON

PROCEDE DE GESTION D'UN RESEAU AU SOL/SATELLITE ET SON DISPOSITIF DE MISE EN UVRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**14.03.2018   Bulletin 2018/11**

(73) Proprietors:
• **Mitsubishi Electric R & D Centre Europe B.V.
1119 NS Schiphol Rijk (NL)**
Designated Contracting States:
**FR**
• **Mitsubishi Electric Corporation
Chiyoda-ku
Tokyo 100-8310 (JP)**
Designated Contracting States:
**AL AT BE BG CH CY CZ DE DK EE ES FI GB GR HR HU IE IS IT LI LT LU LV MC MK MT NL NO PL PT RO RS SE SI SK SM TR**

(72) Inventor: **CIOCHINA, Cristina
35000 Rennes (FR)**

(74) Representative: **Cabinet Plasseraud
66, rue de la Chaussée d'Antin
75440 Paris Cedex 09 (FR)**

(56) References cited:
**EP-A1- 0 978 954      EP-A1- 3 062 451
WO-A1-2015/151372**

• **QIAN CEN ET AL: "Traffic-based dynamic beam coverage adjustment in satellite mobile communication", 2014 SIXTH INTERNATIONAL CONFERENCE ON WIRELESS COMMUNICATIONS AND SIGNAL PROCESSING (WCSP), IEEE, 23 October 2014 (2014-10-23), pages 1-6, XP032710783, DOI: 10.1109/WCSP.2014.6992014 [retrieved on 2014-12-18]**

**Description**

The present invention relates generally to a method and a device for managing an integrated satellite-terrestrial network upon occurrence of an abnormal situation in an area covered by the integrated satellite-terrestrial network.

An integrated satellite-terrestrial network is a communication network that comprises a satellite network component and a terrestrial network component, sometimes referred to as a Complementary Ground Component, for example a terrestrial cellular network component. Depending on the architecture of the integrated satellite-terrestrial network, the two components (satellite and terrestrial) may be controlled by the same resource and network management sub-system which is part of a core network component of the integrated satellite-terrestrial network.

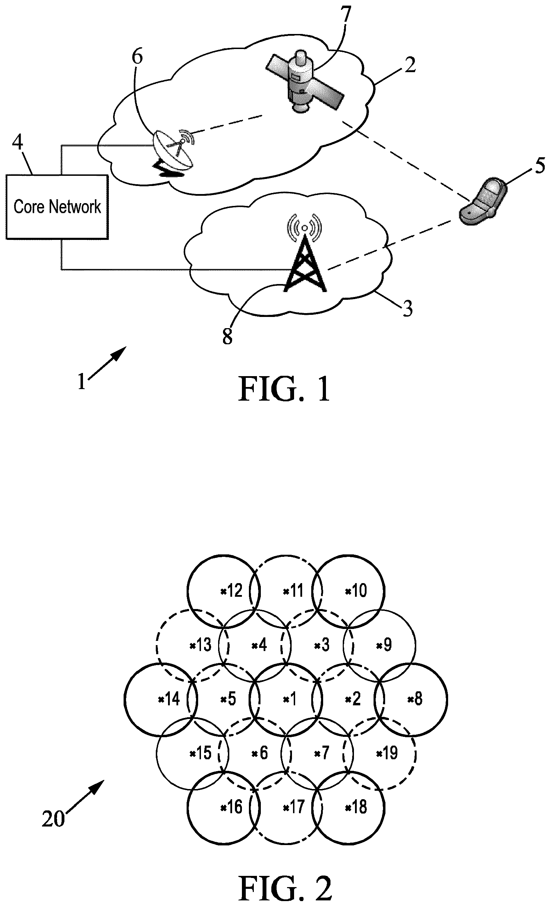

Fig. 1 shows an example of an integrated satellite-terrestrial network (1), which comprises a satellite network component (2), a terrestrial network component (3) (for example a cellular radio access network), and a core network (4) operatively connected to the satellite network component (2) and the terrestrial network component (3). The core network (CN) (4), sometimes referred to as a network management unit, implements control functions for both the satellite network component (2) and the terrestrial network component (3).

The satellite network component (2) typically comprises at least one gateway node (Gw) (6) configured for satellite communication with one or several satellite nodes (Sat) (7), and for communication with the core network (4).

The terrestrial network component (3) comprises at least one access node (8), for example a base station, configured for communication with the core network (4). The terrestrial network component may implement various types of terrestrial wireless networks, such as, for example, a cellular network, e.g. a GSM (Group Special Mobile) network, a UMTS (Universal Mobile Telecommunications Service) network, a LTE (Long Term Evolution) network, a LTE-A (Long Term Evolution-Advanced) network, or a combination thereof.

The integrated satellite-terrestrial network (1) also comprises one or more user equipment (5) which have dual-mode capabilities, that is, which are configured so as to be capable of communicating through the satellite network component (2) and through the terrestrial network component (3).

The satellite network component (2) and the terrestrial network component (3) may use resources that are managed by the core network (4), and may also use the same resources, depending on the type of resource sharing between the two components. For example, resources commonly used by the satellite network component (2) and the terrestrial network component (3) may include portions of frequency bands, and/or antenna polarizations.

Different resource sharing schemes may be implemented in the integrated satellite-terrestrial network (1) for sharing resources used by the network (1). For example, frequency resources may be shared by the satellite network component (2) and the terrestrial network component (3) by means of a frequency division scheme, or by frequency sharing.

In the frequency division scheme (also referred to as Frequency Division Multiplex, or FDM), the satellite network component (2) and the terrestrial network component (3) use respective separate (that is, with no overlap) frequency bands. The advantage of the frequency division scheme is that in-band interference between the two components (2) and (3) is dramatically reduced, although some out-of-band interference may exist due to out-of-band transmission leakage.

In the frequency sharing scheme (also referred to as Frequency Reuse), some frequency resource may be used by both the satellite network component (2) and the terrestrial network component (3).

Resources allocated to the satellite network component (2) can further be configured so as to be split, according to frequency and/or antenna polarization, into several sub-portions, usually identified by respective so-called color codes. Those resources can be used with a certain reuse factor by the set of beams generated by the satellite Sat (7), in order to provide a multi-beam deployment at the terrestrial geographical area serviced by the satellite network component (2). Generally, beam coverage patterns are uniform and beams are allocated equal frequency bandwidths.

The integrated satellite-terrestrial network (1) may be configured so that in a normal operating mode, the traffic load is split between the satellite network component (2) and the terrestrial network component (3), with each component being dimensioned to cope with a predefined traffic profile.

Various situations may occur that trigger a change in the traffic load sharing between the two components, for example as compared to the traffic load sharing corresponding to the normal operating mode of the two components.

For example, if a disaster such as an earthquake, a tsunami, a hurricane, a tornado occurs in the geographical area serviced by the terrestrial network component (3), the terrestrial network component (3) in the disaster region may become overloaded in terms of simultaneously connected user equipments or required total throughput, or even non-operational. This abnormal situation may result in a change in the traffic load sharing between the two components corresponding to the normal operating mode, for example generated by a massive demand for satellite access originated from user equipments located in the disaster region (regular users wanting to communicate and unable to communicate through the terrestrial network component (3), emergency services arriving on-site and having high communication needs, etc.). This massive demand may in turn lead to capacity outage at the satellite network component (2).

An abnormal situation occurring in an integrated satellite-terrestrial network including a satellite component with satellite nodes capable of transmitting a steerable beam may be handled through a resource re-allocation within the area covered by the steerable beam.

There is however still a need for a method for managing an integrated satellite-terrestrial network upon occurrence of an abnormal situation where a steerable beam is not available at the satellite network component for covering the region of occurrence of the abnormal situation.

Document WO2015/151372 A1 relates to a frequency-shared wireless communication system, which includes a terrestrial wireless communication system and a satellite communication system.

Document EP3062451 A1 relates to a method for re-allocating resources in an integrated satellite-terrestrial network if an abnormal situation occurs.

In particular, it is an object of the present subject disclosure to provide an improved method for managing an integrated satellite-terrestrial network upon occurrence of an abnormal situation in a geographical area serviced by the integrated satellite-terrestrial network, according to claim 1. In addition it is an object of the present subject disclosure to provide a network node, a non-transitory computer-readable medium encoded with executable instructions, and a computer program product according to claims 9, 11 and 12. Further embodiments are described in dependent claims 2 to 8, 10.

Another object of the present subject disclosure is to provide an improved method for managing an integrated satellite-terrestrial network upon occurrence of an abnormal situation in the terrestrial component of the integrated satellite-terrestrial network, in the absence of a steerable beam at one or more of the satellite nodes of the satellite component of the integrated satellite-terrestrial network.

Yet another object of the present subject disclosure is to provide a device configured for implementing an improved method for managing an integrated satellite-terrestrial network upon occurrence of an abnormal situation in a geographical area serviced by the integrated satellite-terrestrial network.

To achieve these objects and other advantages and in accordance with the purpose of the present subject disclosure, as embodied and broadly described herein, in one aspect of the present subject disclosure, a method for managing an integrated satellite-terrestrial network, the integrated satellite-terrestrial network comprising a terrestrial network component, and a satellite network component transmitting at least one satellite beam, is proposed. The method comprises: detecting the occurrence of an abnormal situation based on a change in a traffic load of the terrestrial network component and/or the satellite network component, performing a first method of managing the abnormal situation, wherein the first method of managing the abnormal situation comprises: determining a target beam footprint covering at least partially an area of occurrence of the abnormal situation; and transmitting to the satellite network component a beam reconfiguration request for reconfiguring the at least one satellite beam ($C_i$, $R_i$) transmitted by the satellite network component according to the target beam footprint.

The proposed method for managing an integrated satellite-terrestrial network advantageously provides a method for handling an abnormal situation which does not require re-allocating the resources used by the terrestrial network component and/or the satellite network component before performing the method.

It also has the advantage that it does not require a satellite network component with a least one satellite node provided with one or several steerable beams, so that it can be performed in an integrated satellite-terrestrial network where at least one satellite node is not provided with one or several steerable beams.

In some embodiments, the detecting the occurrence of an abnormal situation comprises the detecting of a change in a traffic load of the terrestrial network component beyond a predetermined terrestrial traffic load threshold.

In some embodiments, the detecting the occurrence of an abnormal situation comprises the detecting of an increase of a traffic load of the satellite network component beyond a predetermined satellite traffic load threshold.

In some embodiments, the proposed method further comprises: transmitting to the terrestrial network component a request for reconfiguring the terrestrial network component generated based on the beam reconfiguration request.

In some embodiments where a plurality of methods of managing the abnormal situation are available in the integrated satellite-terrestrial network, the proposed method may further comprise: selecting the first method of managing the abnormal situation among the plurality of methods of managing the abnormal situation available in the integrated satellite-terrestrial network. Advantageously, the proposed method may also further comprise: selecting a second method of managing the abnormal situation among the plurality of methods of managing the abnormal situation available in the integrated satellite-terrestrial network, and performing the second method of managing the abnormal situation. In some embodiments, the second method of managing the abnormal situation may use a reconfiguration of resources of the integrated satellite-terrestrial network.

In some embodiments, wherein the satellite network component transmits a plurality of satellite beams, the proposed method may further comprise: determining parameters ($C_b$, $R_b$) of the target beam footprint defining a circular region covering at least partially the area of occurrence of the abnormal situation; identify a first beam among the plurality of satellite beams transmitted by the satellite network component whose footprint corresponds to the circular region; and determine parameters for a reconfigured first beam based on the parameters defining the circular region. In such case, the proposed method may also comprise in some embodiments: determining a center $C_b$ and a radius $R_b$ of the circular region; determining a center $C'_i$ and a radius $R'_i$ of the reconfigured first beam based on the center $C_b$ and radius $R_b$ of the circular region, respectively. The proposed method may also additionally comprise: identify a second beam whose footprint neighbors the first beam, and determine parameters for a reconfigured second beam based on the parameters determined for the reconfigured first beam.

In another aspect of the present subject disclosure, a network node in an integrated satellite-terrestrial network comprising a terrestrial network component and a satellite network component transmitting at least one satellite beam, the network node comprising a processor, a memory, operatively coupled to the processor, and being configured to perform any of the proposed methods for managing the integrated satellite-terrestrial network according to the present subject disclosure, is proposed.

In yet another aspect of the present subject disclosure, a non-transitory computer-readable medium encoded with executable instructions which, when executed, causes a network node comprising a processor operatively coupled with a memory, to perform any of the proposed methods for managing the integrated satellite-terrestrial network according to the present subject disclosure, is proposed.

In yet another aspect of the present subject disclosure, a computer program product comprising computer program code tangibly embodied in a computer readable medium, said computer program code comprising instructions to, when provided to a computer system and executed, cause said computer to perform any of the proposed methods for managing the integrated satellite-terrestrial network according to the present subject disclosure, is proposed.

It should be appreciated that the present invention can be implemented and utilized in numerous ways, including without limitation as a process, an apparatus, a system, a device, and as a method for applications now known and later developed. These and other unique features of the system disclosed herein will become more readily apparent from the following description and the accompanying drawings.

## Brief description of the drawings

The present subject disclosure will be better understood and its numerous objects and advantages will become more apparent to those skilled in the art by reference to the following drawings, in conjunction with the accompanying specification, in which:

Fig. 1 is a block diagram illustrating a satellite-terrestrial network according to embodiments of the present subject disclosure;
Fig. 2 is a block diagram illustrating a satellite beam pattern;
Fig. 3 is a block diagram illustrating a resource sharing scheme between a satellite network component and a terrestrial network component of an integrated satellite-terrestrial network;
Fig. 4 is a flowchart of a method of managing an integrated satellite-terrestrial network according to embodiments of the present subject disclosure;
Figs. 5a and 5b are flowcharts of other methods of managing an integrated satellite-terrestrial network according to embodiments of the present subject disclosure;
Fig. 6 is a block diagram illustrating a target footprint in a satellite beam pattern according to embodiments of the present subject disclosure;
Figs. 7a, 7b, and 7c are flowcharts of satellite footprint reconfiguration schemes according to embodiments of the present subject disclosure;
Figs. 8a, 8b, and 8c are block diagrams illustrating satellite footprint reconfigurations according to embodiments of the present subject disclosure;
Figs. 9a and 9b are block diagrams illustrating methods of resource re-allocation according to embodiments of the present subject disclosure;
Fig. 9c is a flowchart illustrating a method of resource re-allocation according to embodiments of the present subject disclosure;
Fig. 10 is a flowchart illustrating a method of managing an abnormal situation according to embodiments of the present subject disclosure;
Fig. 11 is a block diagram illustrating exemplary functionality of a network node, in accordance with one or more embodiments of the present subject disclosure.

## Description of embodiments

The advantages, and other features of the components disclosed herein, will become more readily apparent to those having ordinary skill in the art form. The following detailed description of certain preferred embodiments, taken in conjunction with the drawings, sets forth representative embodiments of the subject technology, wherein like reference numerals identify similar structural elements.

For simplicity and clarity of illustration, the drawing figures illustrate the general manner of construction, and descriptions and details of well-known features and techniques may be omitted to avoid unnecessarily obscuring the discussion of the described embodiments of the subject disclosure. Additionally, elements in the drawing figures are not necessarily drawn to scale. For example, the dimensions of some of the elements in the figures may be exaggerated relative to other elements to help improve understanding of embodiments of the present subject disclosure. Certain figures may be shown in an idealized fashion in order to aid understanding, such as when structures are shown having straight lines, sharp angles, and/or parallel planes or the like that under real-world conditions would likely be significantly less symmetric and orderly.

In addition, it should be apparent that the teaching herein can be embodied in a wide variety of forms and that any specific structure and/or function disclosed herein is merely representative. In particular, one skilled in the art will appreciate that an aspect disclosed herein can be implemented independently of any other aspects and that several aspects can be combined in various ways.

The present disclosure is described below with reference to functions, engines, block diagrams and flowchart illustrations of the methods, systems, and computer program according to one or more exemplary embodiments. Each described function, engine, block of the block diagrams and flowchart illustrations can be implemented in hardware, software, firmware, middleware, microcode, or any suitable combination thereof. If implemented in software, the functions, engines, blocks of the block diagrams and/or flowchart illustrations can be implemented by computer program instructions or software code, which may be stored or transmitted over a computer-readable medium, or loaded onto a general purpose computer, special purpose computer or other programmable data processing apparatus to produce a machine, such that the computer program instructions or software code which execute on the computer or other programmable data processing apparatus, create the means for implementing the functions described herein.

Embodiments of computer-readable media include, but are not limited to, both computer storage media and communication media including any medium that facilitates transfer of a computer program from one place to another. As used herein, a "computer storage media" may be any physical media that can be accessed by a computer. Examples of computer storage media include, but are not limited to, a flash drive or other flash memory devices (e.g. memory keys, memory sticks, key drive), CD-ROM or other optical storage, DVD, magnetic disk storage or other magnetic storage devices, memory chip, RAM, ROM, EEPROM, smart cards, Solid State Drive (SSD) devices or Hard Disk Drive (HDD) devices, or any other suitable medium from that can be used to carry or store program code in the form of instructions or data structures which can be read by a computer processor. Also, various forms of computer-readable media may transmit or carry instructions to a computer, including a router, gateway, server, or other transmission device, wired (coaxial cable, fiber, twisted pair, DSL cable) or wireless (infrared, radio, cellular, microwave). The instructions may comprise code from any computer-programming language, including, but not limited to, assembly, C, C++, Visual Basic, HTML, PHP, Java, Javascript, Python, and bash scripting.

Unless specifically stated otherwise, it will be appreciated that throughout the following description discussions utilizing terms such as processing, computing, calculating, determining, or the like, refer to the action or processes of a computer or computing system, or similar electronic computing device, that manipulate or transform data represented as physical, such as electronic, quantities within the registers or memories of the computing system into other data similarly represented as physical quantities within the memories, registers or other such information storage, transmission or display devices of the computing system.

The terms "comprise," "include," "have," and any variations thereof, are intended to cover a non-exclusive inclusion, such that a process, method, article, or apparatus that comprises a list of elements is not necessarily limited to those elements, but may include other elements not expressly listed or inherent to such process, method, article, or apparatus.

Additionally, the word "exemplary" as used herein means serving as an example, instance, or illustration. Any aspect or design described herein as "exemplary" is not necessarily to be construed as preferred or advantageous over other aspects or designs.

In the following description and claims, the terms "coupled" and "connected", along with their derivatives, may be used. In particular embodiments, "connected" or "coupled" may be used interchangeably to indicate that two or more elements are in direct physical or electrical contact with each other. However, "coupled" or "connected" may also mean that two or more elements are not in direct contact with each other, but yet still co-operate or interact with each other.

It should be understood that embodiments of the present subject disclosure may be used in a variety of applications or integrated satellite-terrestrial network. Different architectures of integrated satellite-terrestrial networks to which the present subject disclosure is applicable are described in the ETSI Technical Recommendation TR 103 124 v1.1.1, entitled "Satellite Earth Stations and Systems (SES); Combined Satellite and Terrestrial Networks scenarios".

Although the present subject disclosure is not limited in this respect, the methods for managing an integrated satellite-terrestrial network disclosed herein may be used in many apparatuses such as in any network node or server of an integrated satellite-terrestrial network. For clarity, the following description focuses on the non-limiting case where the proposed methods for managing an integrated satellite-terrestrial network are implemented in a network controller located in a core network of the integrated satellite-terrestrial network. However, technical features of the present subject disclosure are not limited thereto.

Further, the methods for managing an integrated satellite-terrestrial network disclosed herein may be used for various types or architectures of satellite network component or terrestrial network component. With respect to the terrestrial network component, the proposed methods for managing an integrated satellite-terrestrial network may be used for wireless communication systems using various multiple access technologies, such as but not limited to code division multiple access (CDMA), frequency division multiple access (FDMA), time division multiple access (TDMA), orthogonal frequency division multiple access (OFDMA), single carrier-frequency division multiple access (SC-FDMA), or a combination thereof. The CDMA technology may be implemented in a 3$^{rd}$ Generation Partnership Project (3GPP) Universal Mobile Telecommunications Network (UMTS) network or a CDMA2000 network. The TDMA technology may be implemented in a Global System for Mobile communications (GSM) system, a General Packet Radio Service (GPRS) system, and/or an Enhanced Data Rates for GSM Evolution (EDGE) network. The OFDMA technology may be implemented in a IEEE 802.11 (Wifi), a 802.16 (WIMAX), 802.20, an 3GPP Evolved UMTS, E-UTRA, Long-Term Evolution (LTE), and/or LTE-Advanced (LTE-A) network.

The methods for managing an integrated satellite-terrestrial network disclosed herein may be used for various types of wireless devices, which are fixed or mobile, which have dual mode capabilities corresponding to the integrated satellite-terrestrial network. Such dual mode wireless devices may be configured to be serviced by default by the terrestrial network component of the integrated satellite-terrestrial network, and to request access to and be serviced by the satellite network component when they are unable to access the terrestrial network component.

A wireless device may be indifferently referred to using another terminology, such as, a user equipment (UE), a mobile station (MS), a personal digital assistant (PDA), a wireless modem, a handheld device, etc. A wireless device may also be a device which supports only data communication, such as a Machine-to-Machine (M2M) device, or a Machine-Type Communication (MTC) device.

Fig. 2 shows an example of uniform coverage satellite beam pattern with 4 colors.

Even though Fig. 2 shows an ideal footprint with circular beams, the skilled person would understand that in practice, the real footprint at the Earth spherical surface is not perfectly circular.

For clarity, the figures of the present subject disclosure show circular beam patterns. However technical features of the present subject disclosure, and in particular the methods for managing an integrated satellite-terrestrial network disclosed herein, are not limited thereto.

Shown on Fig. 2 is a satellite footprint (20) that comprises 19 satellite beams (numbered 1 to 19) that are substantially circular. Each beam is allocated a frequency and/or polarization resource (color) among 4 available different resources. The resource allocation map is designed so as to limit interference between adjacent beams.

In the satellite footprint (20) shown on Fig. 2, beams 1, 8, 10, 12, 14, 16, and 18 use a first color, beams 2, 5, 11, and 17 use a second color, beams 3, 6, 13, and 19 use a third color, and beams 4, 7, 9, and 15 use a fourth color.

In Fig. 2, only 19 beams using $N_{colors}$=4 different colors are shown for the sake of simplicity, but a multi-beam satellite usually has several tens/hundreds of beams reusing a predefined number $N_{colors}$ of colors.

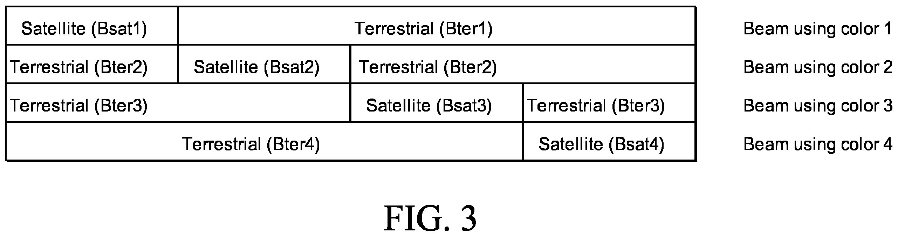

Fig. 3 shows an example of frequency resource sharing between a satellite network component and a terrestrial network component of an integrated satellite-terrestrial network.

The horizontal axis shows the frequency resources allocated to the integrated satellite-terrestrial network.

The vertical axis shows an example of resource use in different beams wherein the satellite network component uses $N_{colors}$ = 4 different colors. For example, the satellite network component may use $N_{colors}$ = 4 different frequency bands (each color corresponding to a frequency band), or $N_{colors}/2$ = 2 different frequency bands and $N_{colors}/2$ = 2 different polarizations.

For the beams using the first color, the satellite component uses the resources noted Bsat1 and the terrestrial network component uses the resources noted BTer1 for servicing the geographical areas covered by those beams.

For the beams using the second color, the satellite component uses the resources noted Bsat2 and the terrestrial network component uses the resources noted BTer2 for servicing the geographical areas covered by those beams.

For the beams using the third color, the satellite component uses the resources noted Bsat3 and the terrestrial network component uses the resources noted BTer3 for servicing the geographical areas covered by those beams.

For the beams using the fourth color, the satellite component uses the resource noted Bsat4 and the terrestrial network component uses the resources noted BTer4 for servicing the geographical areas covered by those beams.

In frequency sharing, the two components may thus use the same sets of resources.

In the example shown on Fig. 3, within the geographical area covered by each satellite beam, the terrestrial network component uses all the available resources, (frequency and/or possibly polarization) which are not used by the satellite component in that beam.

Inter-component interference is higher than in the frequency division configuration. The system does not only experience out-of-band interference due to leakage but also in-band interference, especially for user equipments located at beam footprint edges, such as, for example, between user equipments using the satellite resource in a beam footprint and user equipments using the terrestrial network component using the same resource but located in a neighboring beam footprint.

Frequency sharing offers higher available system bandwidth/spectral efficiency due to better spectrum utilization, but may require some terrestrial/satellite interference mitigation/cancelling.

Different interference patterns exist, depending on how uplink and downlink signals are mapped on resources for the satellite component and the terrestrial network component.

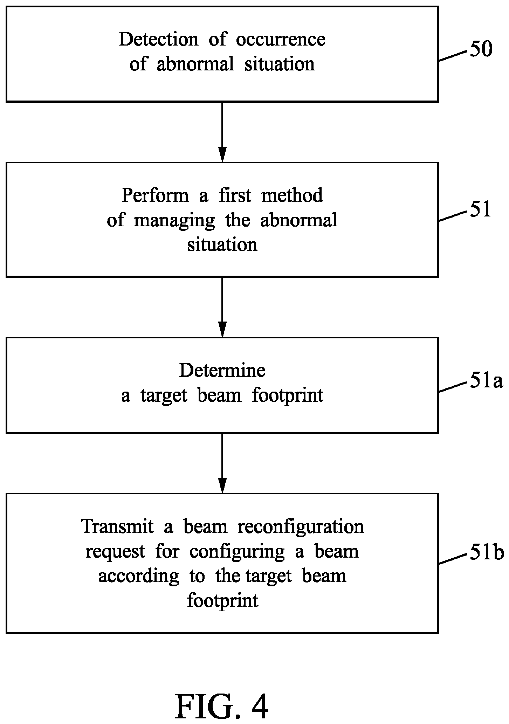

Fig. 4 is a flow chart of a method of managing an integrated satellite-terrestrial network according to embodiments of the present subject disclosure.

The occurrence of an abnormal situation in a geographical area serviced by the terrestrial network component is first detected (50).

The present subject disclosure is not limited to a specific type of abnormal situation, such as, for example, a natural disaster, or an emergency situation. In particular, the present subject disclosure applies to any non-emergency situation resulting in the detection, for example in the integrated satellite-terrestrial network, of an abnormal situation in view of predefined criteria. Such predefined detection criteria may for example lead to a detection of an abnormal situation in cases of terrestrial network component capacity overload, including non-emergency cases leading to a terrestrial network component capacity overload (sport events, media events, etc.).

In some embodiments, the detection of occurrence of an abnormal situation in a geographical area serviced by the terrestrial network component may comprise the detection of a change in traffic load sharing between the terrestrial network component and the satellite network component. In other embodiments it may comprise the detection of a change of a traffic load of the terrestrial network component beyond a predetermined variation threshold.

As described above, the occurrence of an abnormal situation in the area serviced by the terrestrial network component may provoke an increase in the traffic load of the terrestrial network component due to an increase in the number of user equipments simultaneously requesting access to the terrestrial network component beyond a terrestrial traffic increase threshold. On the contrary, the infrastructure of the terrestrial network component may be damaged and may become non-operational, which may lead to a decrease of the traffic load on the terrestrial network beyond a terrestrial traffic decrease threshold.

In some embodiments, the detection of occurrence of an abnormal situation in a geographical area serviced by the terrestrial network component may comprise the detection of a change of a traffic load of the satellite network component beyond a predetermined threshold.

As described above, the occurrence of an abnormal situation in the area serviced by the terrestrial network component may provoke an increase in the traffic load of the satellite network component due to an increase in the number of user equipments unable to access the terrestrial network component, and simultaneously requesting access to the satellite network component beyond a satellite traffic increase threshold.

In embodiments where the methods of the present subject disclosure are implemented at a network controller, the detection of the occurrence of an abnormal situation in the area serviced by the terrestrial network component may comprise the reception by the network controller of reports from the terrestrial network component and/or the satellite network component informing the network controller of an occurrence of an abnormal situation, for example through informing the network controller of a change (decrease or increase) in a traffic load beyond a respective predetermined threshold.

Depending on the embodiment, a monitoring and alerting with respect to occurrence of an abnormal situation may be performed at the network controller, or at one or several respective nodes of the satellite network component and/or the terrestrial network component, in which case the network controller may be configured to receive reports from the satellite network component and/or the terrestrial network component, and detect the occurrence of a situation requiring the performance of a method for managing the integrated network based on a received report.

For example, the integrated network may be configured to monitor indicators of occurrence of an abnormal situation. The network controller may be configured to receive periodic information from both the terrestrial and the satellite components that includes reports on the number of connected and idle users in each cell and in each beam. Statistically, a number of turned-off users (that can potentially be turned on and demand access in an abnormal situation) can be assumed. A user involved in a communication (data, voice) with a base station may be considered as connected, while a user whose terminal is turned on but not connected may be considered as idle. The network controller may also in some embodiments have knowledge of the geographical location of each cell/beam and be able to identify sudden changes in the network behavior occurring in neighboring geographical areas.

When an abnormal situation occurs in a certain geographical area, several scenarios may happen as discussed above, such as scenarios in which the terrestrial component is overloaded, and scenarios in which parts or all of the terrestrial component are non-operational.

In the case where the abnormal situation impacts the terrestrial surface without causing major failure of the terrestrial component, the integrated network may experience increased traffic demand on the terrestrial component, which may become saturated (users in stand-by might try to establish communications). Some of the users not being able to connect to the terrestrial component are likely to try and connect to the satellite component, which will as a consequence experience increased traffic demand.

Terrestrial component saturation may occur for cells in a specific geographical region, which may be identified as a potential abnormal situation region. The potential abnormal situation region may also be identified based on some cells belonging to the potential abnormal situation region which may be failing (missing reports, or reports of major radio link failure from their respective users). When the abnormal situation occurs near a beam border, increased uplink traffic localized at beam border may cause increased interference level on the terrestrial cells which are geographically close but situated in neighboring beams. If interference level becomes important, some users in these cells may try and switch to their respective satellite component.

In one or more embodiments, the network controller may be configured to identify a abnormal/disaster/emergency situation based on:

i. the network controller receiving reports showing that several geographically close terrestrial cells are overloaded and/or few cells in the same region are failing and can thus identify a potential abnormal situation region;

ii. Increased satellite traffic demand in the beam or beams where a potential abnormal situation region is located; and/or

iii. slightly increased satellite traffic demand in one or several beams neighboring a beam containing a potential abnormal situation region.

If the current configuration of the network is able to cope with the demand, the network controller may be configured not to trigger any changes in the integrated network. If, on the other hand, traffic on the satellite component also approaches saturation, the network controller may be configured to evaluate whether taking specific measures is likely to improve network capacity or not. Specific measures may comprise, for example, restricting access to the terrestrial network in a terrestrial restricted region (comprising the potential abnormal situation region and, possibly, an exclusion area around it).

In case of a major disaster (important earthquake, major flooding, fire, etc.), the terrestrial network may likely fail in a limited geographical area. Users at terrestrial surface connected to the failing terrestrial cells will suffer a massive radio link failure (RLF), and will try to access the satellite network. Users who were in an idle or turned-off state may also try to access the satellite network and establish communications. Also to be expected in such a case is an increased traffic demand originating from specialized services (emergency units, police, medical intervention groups, media, etc). When disaster occurs near a beam border, increased uplink traffic localized at beam border causes increased interference level on the terrestrial cells geographically close but situated in neighboring beams. If interference level becomes important, some users in these cells may try and switch to their respective satellite component.

In one or more embodiments, the network controller may be configured to identify a major abnormal/disaster/emergency situation based on:

i. the network controller receiving reports showing that several geographically close terrestrial cells are failing and/or few cells in the same region are overloaded;

ii. increased satellite traffic demand in the beam or beams where the potential abnormal situation region is located, approaching saturation; and/or

iii. increased satellite traffic demand in one or several beams neighboring a beam containing a potential abnormal situation region .

In one or more embodiments, the network controller may be configured to monitor network indicators in order to detect abnormal situations. The network controller may be configured to identify the existence of an abnormal situation, based on an identification of a abnormal situation region composed of several geographically close terrestrial cells suffering overload and/or failure; an increased satellite traffic demand in the beam or beams where the abnormal situation region is located; and/or a slightly increased satellite traffic demand in one or several beams neighboring a beam containing an abnormal situation region, and determine a level of seriousness of the abnormal situation, based on: a size of the abnormal situation area and number of impacted users; a proportion of failing cells in the abnormal situation region; and/or an importance of traffic load in the beam/beams containing the abnormal situation region;

Upon detection of an occurrence of an abnormal situation, a first method of managing the abnormal situation is performed (51).

Performing the first method of managing the abnormal situation comprises the determination (51a) of a target beam footprint covering at least partially an area of occurrence of the abnormal situation.

In some embodiments, a circular model may be used for the target beam footprint. However, the present subject disclosure is not limited in this respect.

Several methods for determining the target beam footprint according to the present subject disclosure will be described below.

In some embodiments, the target beam footprint will be determined so that it fully covers at least the area of occurrence of the abnormal situation. In other embodiments, the determined target beam footprint may only partially cover the area of occurrence of the abnormal situation.

A beam reconfiguration request is then generated (51b) for configuring at least one satellite beam transmitted by the satellite network component according to the determined target beam footprint.

In embodiments where the proposed methods are performed at a network controller which is operatively coupled to the satellite network component, the beam reconfiguration request may be generated at the network controller and transmitted to the satellite network component so that a satellite beam transmitted by the satellite network component may be reconfigured according to the request.

In some embodiments, the generation of a beam reconfiguration request may be followed with the generation of a terrestrial component reconfiguration request for reconfiguring the terrestrial network component based on the reconfiguration requested for the satellite network component. A reconfiguration of the terrestrial network component defined based on the reconfiguration requested for the satellite network component may advantageously prevent interferences between the two components resulting from the satellite network component reconfiguration.

For example, referring to Fig. 3, an area covered by the terrestrial network component using a first color resource under a frequency resource sharing scheme when covered by a first beam may be covered by a second, different beam, as a result of the satellite network component reconfiguration, so that it may advantageously be requested to use a second color resource that corresponds to the second beam under the frequency resource sharing scheme.

In embodiments where the proposed methods are performed at a network controller which is operatively coupled to the terrestrial network component, the terrestrial component reconfiguration request may be generated at the network controller and transmitted to the terrestrial network component so that the terrestrial network may be reconfigured according to the request.

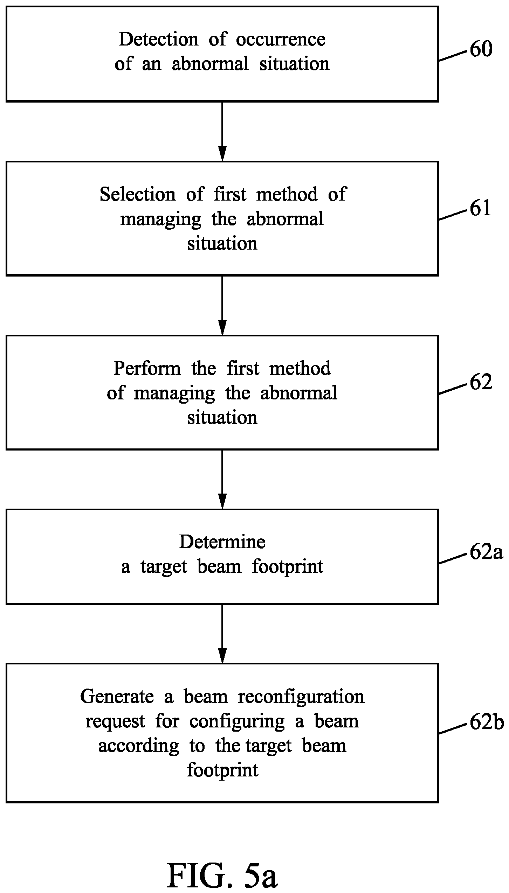

Fig. 5a is a flow chart of another method of managing an integrated satellite-terrestrial network according to embodiments of the present subject disclosure.

In some embodiments, only one method of managing an abnormal situation may be available, that is, implemented, in the integrated satellite-terrestrial network, so that the one method of managing an abnormal situation may be performed upon detection of an occurrence of an abnormal situation.

In other embodiments, several methods of managing an abnormal situation may be available, that is, implemented, in the integrated satellite-terrestrial network. In this case, the proposed method may comprise, further to the detection (60) of occurrence of an abnormal situation, the selection (61) of the first method for managing an abnormal situation among the plurality of methods of managing an abnormal situation available in the integrated satellite-terrestrial network.

The selected first method is then performed (62), with the determination (62a) of a target beam footprint and the generation (62b) of a beam reconfiguration request for configuring a beam transmitted by the satellite network component according to the determined target beam footprint as described above with reference to Fig. 4.

Depending on the embodiment, various criteria can be used for the selection of the first method among the plurality of methods of managing an abnormal situation available in the integrated satellite-terrestrial network. For example, a priority level may be assigned to each method of managing an abnormal situation, with the first method being assigned a highest priority level. In this case, the selection of the first method may result from the selection of a method with the highest priority level.

The priority level may be assigned based on the characteristics of each available method of managing an abnormal situation. For example, the operator of an integrated network where all available resources are in use may choose to assign a higher priority to a dynamic beam reconfiguration method than the priority assigned to a resource reallocation method. Priorities may also be assigned having regard to the types of abnormal situations which are likely to occur in the geographical area serviced by the terrestrial network component and the expected efficiency of each method to address those abnormal situations.

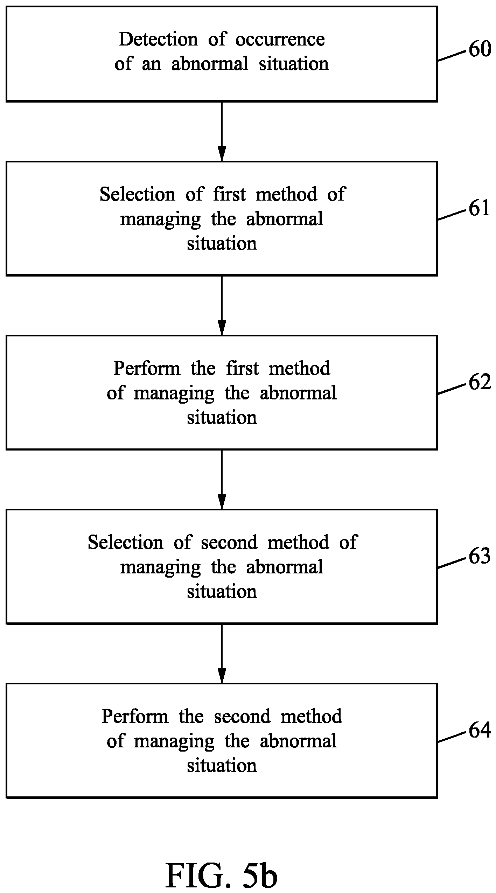

Fig. 5b is a flowchart of yet another method of managing an integrated satellite-terrestrial network according to embodiments of the present subject disclosure.

Reference is made to Fig. 5a and the above description thereof for corresponding features illustrated in Fig. 5b. In addition, a second method of managing the abnormal situation (among the plurality of methods of managing the abnormal situation available in the integrated satellite-terrestrial network) may be selected (63). The selection (63) of the second method may be made based on a criterion used for selecting (61) the first method, or on a different criterion for example taking into account the efficiency of the first method in managing the abnormal situation, and may be made while the first method is being performed (e.g. during the determination of a target beam footprint, during the generating of the beam reconfiguration request, or during the beam reconfiguration at the satellite network component).

The selection (63) of the second method may also be preconfigured, for example based on a predefined priority level.

Once selected the second method of managing the abnormal situation may be performed (64). Depending on the embodiment, the second method may be performed (64) subsequently to performance of the first method (62), and only once the first method is completed, or may be performed concurrently with the first method.

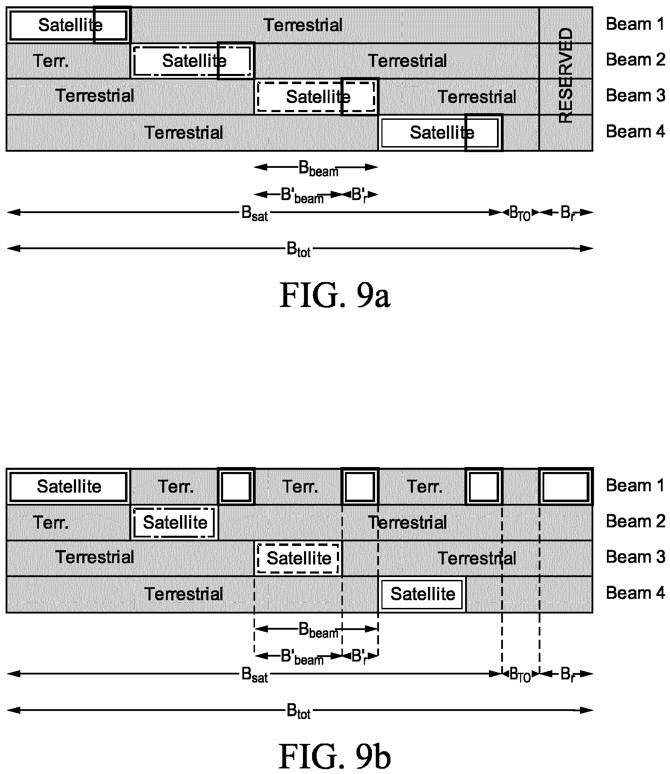

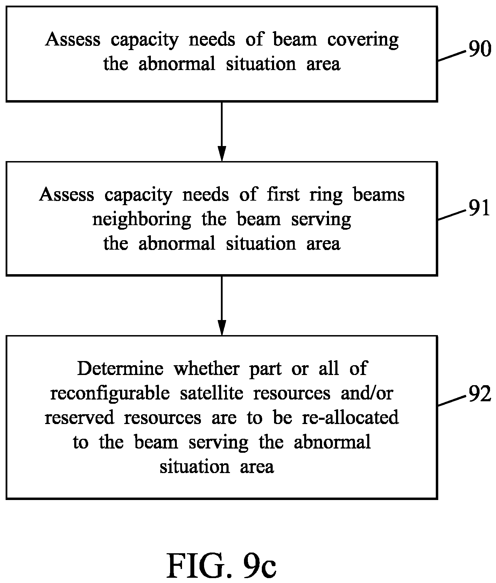

In one or more embodiments, the second method of managing the abnormal situation may use a reconfiguration of resources of the integrated satellite-terrestrial network. Exemplary methods of resource reallocation are described below and illustrated on Figs. 9a, 9b, and 9c.

Methods of satellite footprint reconfiguration will now be described with reference to the exemplary satellite beam footprint of Fig. 2.

Parameters of a circular region, such as a center Cb and a radius Rb, covering a geographical area where an abnormal situation (such as a disaster) has occurred, are determined. This area will be referred to in the following as a "target beam footprint". As discussed above, although a circular model is used for the target beam footprint, the present subject disclosure in not limited thereto.

Depending on the embodiment, as well as the evolution of the abnormal situation region over time, the target beam footprint may cover only partially the area of occurrence of the abnormal situation.

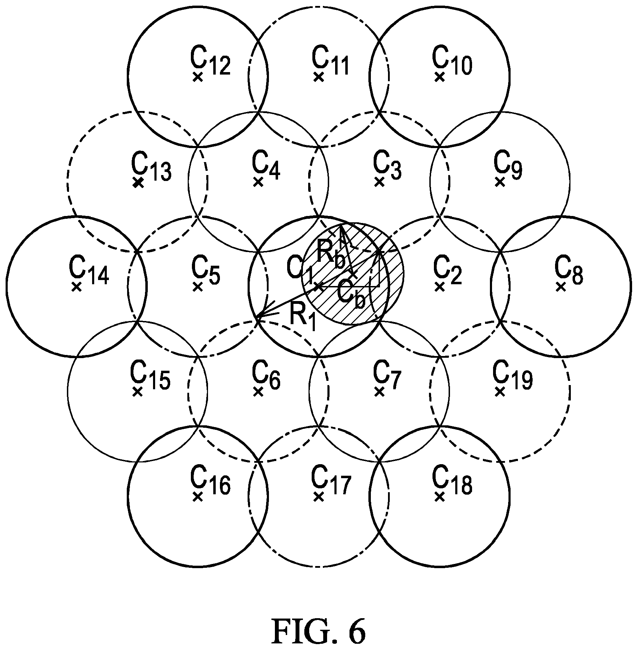

Fig. 6 shows a target beam footprint with a center Cb lying in a triangle having as vertices the center of beam 1, the intersection point of beams 1, 2, and 3, and the midpoint of the segment that connects the centers of beams 1 and 2.

The person skilled in the art would understand that any other position of Cb could be reduced to the position illustrated on Fig. 6 by symmetry and/or beam re-numbering.

Beams 1-19 in the satellite footprint are represented as circles of centre Ci (complex number representing the affix of point C1 in the complex plane) and radii Ri, i=1...19.

In the following the beams directly neighboring Beam 1, that is, with reference to Fig. 6, beams 2 - 7, will be referred to as "first-ring beams", and the beams neighboring the first-ring beams, that is, with reference to Fig. 6, beams 8 - 19, will be referred to as "second-ring beams". Other beams in the satellite footprint are not represented in Fig. 6 since they are not involved in the present description.

In some embodiments, the satellite footprint is reconfigured by modifying the antenna radiation pattern of certain beams in order to manage an abnormal situation such as the occurrence of a disaster in the area serviced by the terrestrial network.

Depending on the embodiment, one or more of the following objectives may be considered for a satellite footprint reconfiguration method of the present subject-matter disclosure:

- Improve the capacity of the satellite link over the abnormal situation area by, e.g., narrowing and recentering the beam serving the abnormal situation area;
- Maintain full satellite link coverage by readjusting the beams neighboring the beam serving the abnormal situation area (1st ring beams);
- Geographically limit the impact of these changes by imposing to keep unmodified all beams not directly neighboring the beam serving the abnormal situation area (2nd ring beams).

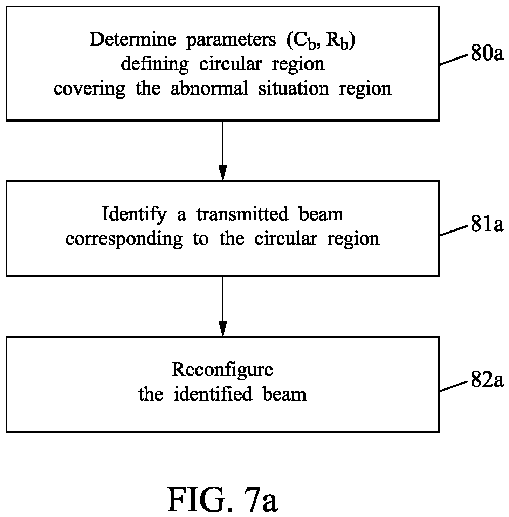

Fig. 7a is a flowchart of a satellite footprint reconfiguration according to an embodiment of the present subject disclosure.

As discussed above, parameters defining a target beam footprint are determined (80), e.g. a center $C_b$ and a radius $R_b$ of the abnormal situation region.

In one or more embodiments, the network controller may be configured to compute the center $C_b$ of the target beam footprint. An objective for this determination may be to concentrate a maximum number of potential users benefiting from the target beam footprint as close as possible to its center $C_b$. In some embodiments, the target beam footprint center can be computed, for example, as a weighted center of the abnormal situation region, where weighting is a function of the number of users (connected, idle or turned off) attached to each cell in the abnormal situation region.

In some embodiments, the network controller may be configured to represent cell positions on a map in Cartesian coordinates represented as complex numbers representing the center of each cell. Let us assume that $c_i$, i=1...$N_d$ are the complex coordinates of the cells identified as belonging to the abnormal situation region, each cell of index i having $u_i$ users attached thereto at a time preceding (preferably immediately preceding) occurrence of the abnormal situation.

The center $C_b$ of the target beam footprint can be computed as, for example, $C_b = \left( \sum_{i=1}^{N_d} c_i f(u_i) \right) / \sum_{i=1}^{N_d} f(u_i).$

The function $f(u_i)$ can have different forms, depending on the importance that one wants to give to the number of users, for example $f(u_i)=1$ if only the location of the cells in the potential abnormal situation region is taken into account, or $f(u_i)=u_i$ if the number of users is taken into account. A person skilled in the art would understand that in various embodiments other types of representation (polar coordinates, etc.) and types of weighting can be used, and how the above formulae would be adapted accordingly.

Depending on the embodiment, other types of criteria may be taken into account to compute the position of the center $C_b$ of the target beam footprint. For example, if the abnormal situation region is larger than the maximum footprint size of available beam footprints, a predefined number of different positions of the center $C_b$ of the target beam footprint may be tested (e.g. by using a predefined grid) in order to choose the most convenient direction (e.g. serving the highest number of potential users).

The network controller may further be configured to compute the beam size of the target beam footprint when this is possible, depending on the type of satellite nodes in the satellite network component (in some satellite systems the beam size can be predetermined, with no possibility to change it). In one or more embodiments, when several positions of the target beam footprint are tested, a beam size may be computed for each such position. Assuming the total power allocated to the beam is limited, the footprint size determines the power density experienced by users at the terrestrial surface. Distributing the power in a larger footprint allows larger coverage, but with lower link margin (and thus potentially limited throughput for users). Inversely, high-power spot beams ensure good service quality in a more retrained geographical area. A predetermined number of beam sizes can be tested for each beam position.

The target beam footprint may preferentially be determined so that it covers the potential abnormal situation area, and/or covers most of the users in this area. An extra exclusion region may in some embodiments be defined around the footprint of the target beam footprint, thereby determining a terrestrial restricted region.

A beam (referred to as "central reconfiguration beam" in the following) among the one or more beams currently transmitted by the satellite network component that corresponds to the circular region is identified (81). In some embodiments, the central reconfiguration beam may be identified based on a correspondence between its beam footprint and the target beam footprint as defined by its determined parameters.

In some embodiments, the beam of which footprint has a center Ci closest to the center Cb can be selected as the central reconfiguration beam corresponding to the abnormal situation region.

In addition, or alternatively, in the case where the center Cb is included in one beam footprint, the beam corresponding to such beam footprint can be selected as the central reconfiguration beam corresponding to the abnormal situation region.

The beam determined as corresponding to the abnormal situation region is then adjusted so that its footprint is reconfigured (82). Preferably, the beam footprint reconfiguration determines values defining a new beam footprint using a circular or quasi-circular beam footprint model.

In some embodiments, the beam footprint reconfiguration is based on the previously determined parameters defining a target beam footprint region (the target beam footprint), so that the parameters of the central reconfiguration beam are determined for the reconfigured beam based on the parameters defining the circular region.

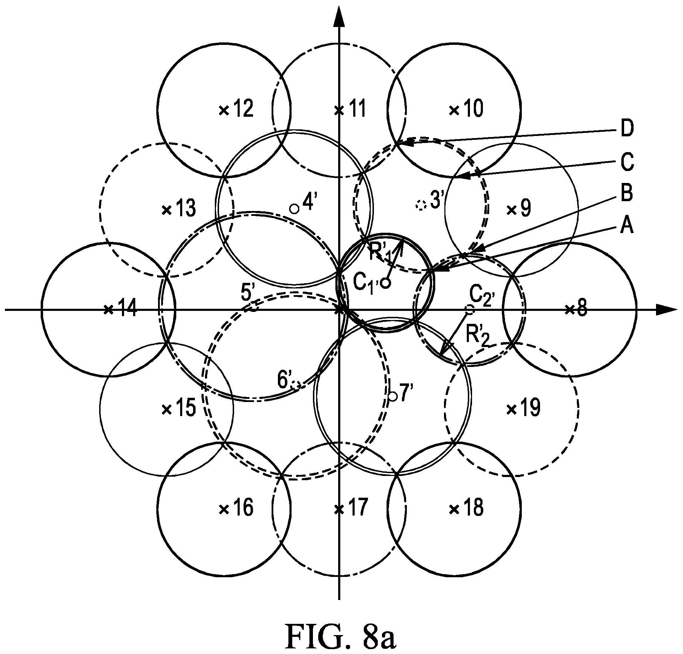

Referring to the example illustrated on Figs. 6 and 8a, beam 1 may for example determined as corresponding to the target beam footprint region defined by $(C_b, R_b)$.

Once identified, the beam of which footprint corresponds to the target beam footprint is reconfigured, with in some embodiments the objective of improving the capacity of the satellite link over the abnormal situation area.

On Fig. 8a, the reconfigured beam 1 is noted beam 1', represented on the satellite footprint by a circle of center $C'_1$ and radius $R'_1$.

The reconfiguration of the beam footprint $(C_1, R_1)$ into $(C'_1, R'_1)$ may be based on the determined values $C_b$ and/or $R_b$.

For example, in an embodiment, the reconfigured beam is reconfigured by adjusting its center and radius to the respective values of the abnormal situation region: $C'_1 = C_b$, and $R'_1 = R_b$.

In another embodiment, a predetermined set of possible positions/radii are available, and the values $(C'_1, R'_1)$ closest to $(C_b, R_b)$ are chosen out of the predetermined set.

In yet other embodiments, the following constraints are taken into account:
First, the satellite node that transmits the beam to be reconfigured may not be capable of producing beams of any size, for example due to antenna diagram limitations, power limitations, etc.

Very small central reconfiguration beams lead to high superposition areas between 1st ring beams after readjustments. This may lead same color beams to come closer together or even overlap (which leads to high levels of inter-beam interference).

In addition, a very large central reconfiguration beam may not provide a spot beam with increased capacity. Therefore, if the abnormal situation area is very large (e.g. larger than a "default" beam of a predetermined radius R), trying to cover it with one single beam may not be effective. Further, this brings closer together the beam covering the abnormal situation area and beams of the same color on the 2nd ring, which may lead to high levels of inter-beam interference.

In some embodiments, when the location of $C_b$ is very close to that of $C_1$ (for example when abs($C_b$-$C_1$), the absolute value of the difference $C_b$-$C_1$, is smaller than a predefined threshold $C_{min}$), $C'_1$ is determined as equal to $C_1$ ($C'_1 = C_1$). The value of Cmin can be determined in function of the network topology, beam size, etc.

In some embodiments, when the location of $C_b$ is far from that of $C_1$ (for example when $abs(C_b-C_1)$ is greater than a predefined threshold Cmax), $C'_1$ may be limited to a maximum distance by choosing $C'_1=C_1+C_{max}\cdot exp(j*arg(C_b-C_1))$. The value of $C_{max}$ can be determined in function of each network topology and accepted interference level.

In some embodiments, when the location of Cb is neither very close to that of $C_1$ nor far therefrom (for example when $C_{min} < abs(C_b-C_1) < C_{max}$), $C'_1$ is determined as equal to $C_b$ ($C'_1 = C_b$).

In some embodiments, when the value of $R_b$ is smaller than a predetermined threshold $R_{bmin}$, $R'_1$ is determined as equal to $R_{bmin}$ ($R'_1 = R_{bmin}$). The value of $R_{bmin}$ can be determined in function of each network topology, satellite capabilities accepted interference level.

In some embodiments, when the value of $R_b$ is greater than a predetermined threshold $R_{bmax}$, $R'_1$ is determined as equal to $R_{bmax}$ ($R'_1=R_{bmax}$). The value of $R_{bmax}$ can be determined in function of each network topology, satellite capabilities and accepted interference level. $R_{bmax}$ may be dependent on the position of $C_b$ (lower allowed maximum values for $C_b$ positions further away from $C_1$), to limit interbeam interference with same color beams on the 2nd ring.

In some embodiments, when the value of $R_b$ is greater than $R_{bmin}$ and smaller than Rbmax, the value of $R'_1$ is chosen equal to $R_b$, or equal to $a \times R_b$, where $a$ is a factor slightly superior to 1, to allow covering at least the identified abnormal situation area.

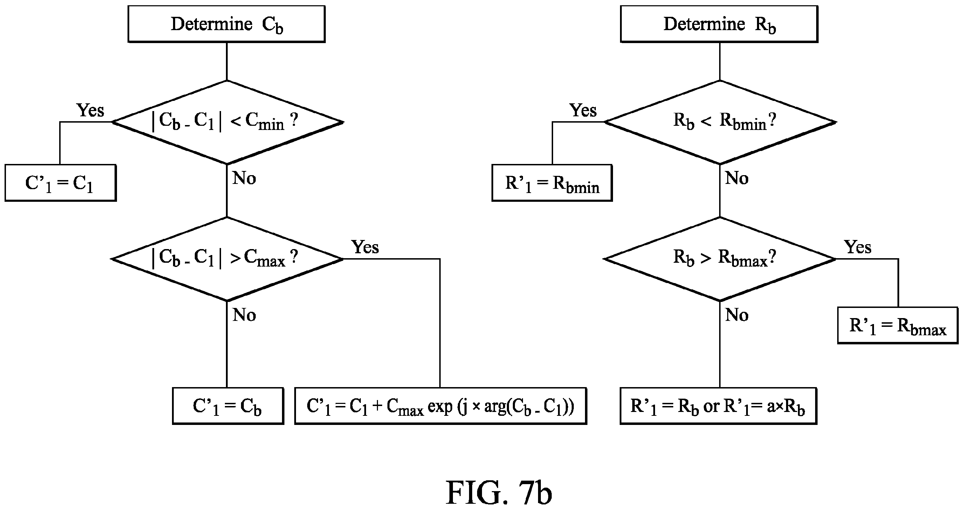

Fig. 7b shows two workflows for respectively determining $R'_1$ and $C'_1$ based on $R_b$ and $C_b$.

Once the value of $C_b$ is determined, the absolute value $|C_b-C_1|$ is compared to $C_{min}$. If $|C_b-C_1| < C_{min}$, then $C'_1=C_1$. Otherwise the absolute value $|C_b-C_1|$ is compared to $C_{max}$. If $|C_b-C_1| > C_{max}$, then $C'_1=C_1+C_{max}exp(j*arg(C_b-C_1))$. Otherwise $C'_1=C_b$.

Once the value of $R_b$ is determined, $R_b$ is compared with $R_{bmin}$. If $R_b<R_{bmin}$, then $R'_1=R_{bmin}$. Otherwise $R_b$ is compared with $R_{bmax}$. If $R_b>R_{bmax}$, then $R'1=Rbmax$. Otherwise, $R'_1=R_b$ in some embodiments, and $R'_1 = a \times R_b$ in other embodiments where $a$ is a predefined factor.

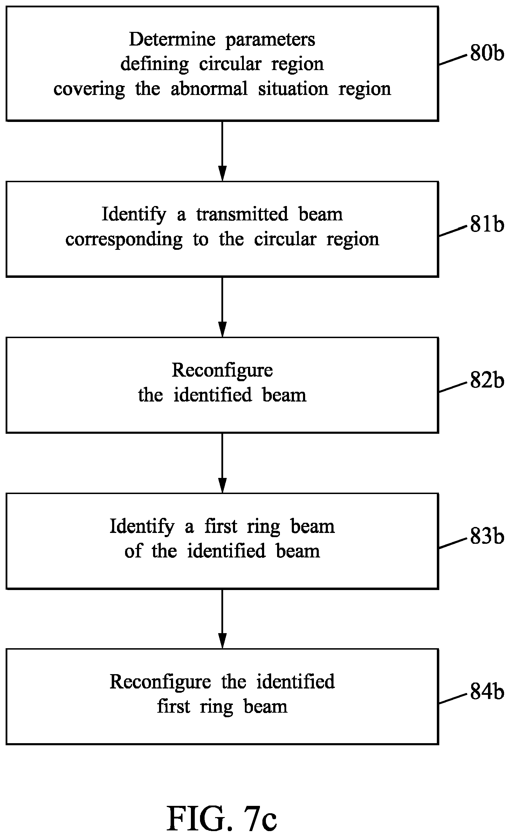

Figure 7c is a flowchart of a satellite footprint reconfiguration according to another embodiment of the present subject disclosure.

In this embodiment, the determining parameters defining a circular region covering the abnormal situation region (80b) (parameters defining a target beam footprint), identifying an existing beam (the central reconfiguration beam) corresponding to the circular region (the target beam footprint) (81b) and reconfiguring the identified central reconfiguration beam (82b) are the same as described above (80a, 81a, 82a) with reference to Fig. 7a.

The embodiment illustrated on Fig. 7c includes, in addition to the reconfiguration of the central reconfiguration beam, a reconfiguration of at least one of the 1st ring beams of the central reconfiguration beam.

At least one of the 1st ring beams is identified (83b), and the identified 1st ring beam is reconfigured (84b) as described below.

Depending on the embodiment, a limited number or all of the 1st ring beams may be identified and reconfigured, for instance according to an iterative process for reconfiguring a 1st ring beam.

In the exemplary beams illustrated on Fig. 6, the central reconfiguration beam (index 1) has 6 1st ring beams: beams 2 - 7. In this case, the process for reconfiguring a 1st ring beam may be repeated for each of the beams with indices 2 to 7, or only for some of them.

Referring to Figs. 6 and 8a, the reconfiguration of 1st ring beams of the central reconfiguration beam in some embodiments may start with the reconfiguration of beam 2. The reconfiguration of beam 2 into a beam noted 2' is done based on one or several of the following reconfiguration conditions, as described below:

- Beam 2' and Beam 1' (reconfigured central reconfiguration beam) need to be neighboring without coverage loss. For example, the following condition may be fulfilled: $abs(C'_2-C'_1) < R'_2+R'_1$;
- In order to ensure maintenance of an overlap between Beam 2' and Beam 1', the circular sector delimited within Beam 1' by the intersection points between Beam 1 and Beam 2' may be chosen to be at least $\theta_{min}$, where the value of $\theta_{min}$ is determined as a function of the accepted level of interference: low values of $\theta_{min}$ may lead to the same color beams coming closer together or even overlapping;
- Beam 2' and those beams on the second ring neighboring Beam 2 need to be neighboring without coverage loss. For example, Beam 2' may be chosen so that the intersection points between Beam 2 and Beam 8 are covered by Beam 2'.

In one or more embodiments, Beam 2' is determined with a footprint corresponding to the smallest enclosing circle satisfying one or more of the above conditions . For example, Beam 2' may be determined as a reconfigured Beam 2 so that its footprint corresponds to the smallest enclosing circle satisfying all of the above conditions.

In other embodiments, Beam 2' is determined as being the same as Beam 2 if Beam 2 satisfies one or more of the above conditions. Otherwise Beam 2' is determined with a footprint corresponding to the smallest enclosing circle satisfying one or more of the above conditions as described above. For example, Beam 2' may be determined as a reconfigured Beam 2 so that its footprint corresponds to the smallest enclosing circle satisfying the above conditions, and the smallest enclosing circle described above is computed only if Beam 2 does not satisfy the above conditions.

The reconfiguration of a first ring beam may therefore comprise the determination of the smallest enclosing circle of a set of points. In one or more embodiments, various known algorithms can be used for the determination of the circle of minimum radius enclosing a finite set of points, a problem which is known in mathematics as the problem of the smallest enclosing circle or the "facility location problem". The smallest enclosing circle of a set of points exists and is unique. The smallest enclosing circle may be characterized by at least two and at most three points of the given set of points.

In some embodiments, if the circle having as diameter the two points of the set of points located the farthest from each other (noted points of affix a1 and a2 in the complex plane in the following) encloses all other points of the set of points, then this circle is selected as the smallest enclosing circle of the set of points. Its center has the affix $(a_1+a_2)/2$ and radius $abs(a_1-a_2)/2$. Otherwise, the circumscribed circle of three points in the set that includes all the other points is selected as the smallest enclosing circle if the triangle having these three points as vertices is acute. Once the three points defining the circle have been found, the radius and the center of the circumscribed circle can be computed through known mathematical formulae, as provided for example in the online resource at URL https://cral.univ-lyon1.fr/labo/fc/Ateliers_archives/ateliers_2005-06/cercle_3pts.pdf.

The smallest enclosing circle can therefore be determined in some embodiments by testing different subsets of 2 and 3 points of the given set. More computationally efficient algorithms may also be used in other embodiments, such as the ones described in Megiddo, Nimrod (1983), "Linear-time algorithms for linear programming in R3 and related problems", SIAM Journal on Computing 12 (4): 759-776, doi:10.1137/0212052, MR 721011, Welzl, Emo (1991), "Smallest enclosing disks (balls and ellipsoids)", in Maurer, H., New Results and New Trends in Computer Science, Lecture Notes in Computer Science 555, Springer-Verlag, pp. 359-370, doi:10.1007/BFb0038202, or in Shamos, M. I.; Hoey, D. (1975), "Closest point problems", Proceedings of 16th Annual IEEE Symposium on Foundations of Computer Science, pp. 151-162, doi:10.1109/SFCS.1975.8.

Once the reconfiguration of first ring beams is completed, the set of reconfigured beams may in some embodiments be tested. To ensure limited interference between reconfigured beams of the same color, requirements such as no overlapping, or a minimum distance between reconfigured beams, may be used.

For example, the test may comprise testing the following inequality $abs(C'_i-C'_j)-R'_i-R'_j \geq d_{min}$ for any two reconfigured beams of the same color, where $d_{min}$ is a positive value that can be determined based on the accepted interference level.

In cases where the tested reconfigured beams do not meet the above requirement(s), a higher value for $R_b$ and/or a position for $C_b$ closer to $C_1$ may be chosen.

In one or more embodiments, a set of potentially valid footprints may be pre-determined using algorithm 2, that is, determined prior to performing a beam footprint reconfiguration, and stored in a database of predetermined values $(C'_1, R'_1)$. When an abnormal situation occurs that corresponds to an area defined by the parameters $(C_b, R_b)$, the values $(C'_1, R'_1)$ closest to $(C_b, R_b)$ (and covering at least the area designated by $(C_b, Rb)$) are selected out of the database of predetermined values $(C'_1, R'_1)$, and the corresponding footprint design can be applied for the reconfiguration.

Referring to Figs. 6 and 8a, the proposed scheme for footprint reconfiguration may in some embodiments comprise the following:

First, re-adjust the central reconfiguration beam (Beam 1) to improve the capacity of the satellite link over the abnormal situation area. After reconfiguration, Beam 1' is represented on the satellite footprint by a circle of center $C'_1$ and radius $R'_1$.

Next, initialize the reconfiguration of first ring beams by choosing an appropriate adjustment of Beam 2 (as described above). After reconfiguration, Beam 2' is represented on the satellite footprint by a circle of center $C'_2$ and radius $R'_2$.

For each following beam Beam$_i$ to be adjusted with $i$ = 3...7 compute an adjusted beam Beam$_{i'}$ represented on the satellite footprint by a circle of center $C'_i$ and radius $R'_i$ as follows:

a) Define a set of inclusion points I$i$ (that need to fall within the coverage area of the adjusted beams), including at least the following points:

◦ The intersection point of circles representing Beam 1' and Beam ($i$-1)' closest to point C$i$;
◦ The intersection point of circles representing Beam ($i$-1)' and the lowest-index beam on the second ring neighboring Beam $i$ (that is, Beam (2*$i$+3) in the beam numbering adopted on Fig. 6); out of the two intersection points of the afore-mentioned circles, select the one point closest to point $C_i$;
◦ The intersection points of circles representing the beams on the second ring neighboring Beam $i$ (that is, Beam (2*$i$+3), Beam (2*$i$+4) and Beam (2*$i$+5) in the beam numbering adopted on Fig. 6); out of the four intersection points of the afore mentioned circles, select the two points closest to point $C_i$;

◦ If i=7, one extra point is included: the intersection point of circles representing Beam 2 and Beam 19 closest to point $C_7$.

b) Compute $C'_i$ and $R'_i$ as the center and radius of the smallest enclosing circle of all the inclusion points $I_i$ computed at step a).

c) in some embodiments, Beam 2' may be readjusted to the smallest enclosing circle of the 6 intersection points closest to $C'_2$ out of the 12 intersection points defined by the intersections of circles representing all beams neighboring Beam 2'.

Once the reconfigured beams for beams 1 - 7 are determined, test the newly reconfigured satellite footprint. In case of incompatibility (e.g. superposition of beams of the same color), modify values of $C_b$ and $R_b$ and re-iterate the reconfiguration of 1st ring beams.

In some embodiments, the computation of one or several reconfigured beams (for example of first ring beams) may not be performed in the case where the corresponding beam in its current state already satisfies the criteria used for defining objectives for a reconfigured beam.

An example of satellite footprint reconfiguration according to the above scheme for a satellite footprint using 4 colors is given in Fig. 8a.

In this example, the graphical representation of the satellite footprint is given in the complex plane, and the origin of the plane is the center of Beam 1. Further, the axes' units are normalized such that the circle representing Beam 1 is of radius $R_1$=1. Beams 1-19 before reconfiguration are represented on Fig. 8a in the satellite footprint as circles of center $C_i$ and radius $R_i$, i=1...19. Each beam Beam i is represented by a couple $(C_i, R_i)$, where $C_i$ is the complex number representing the affix of the center of Beam i, and $R_i$ is a real number representing the beam radius in normalized coordinates.

A numerical example is also provided in Table 1 below. In Table 1, Values of $C_i$ and $R_i$ are respectively given in the 2nd and 3rd columns of Table 1. Beams to be reconfigured (in the example of Fig. 8a Beam 1 and its first ring beams) are plotted in dotted lines, while beams not being reconfigured (second ring beams of Beam 1) are plotted in full lines on Fig. 8a.

In the illustrated example an identified abnormal situation area is assumed to be covered by a abnormal situation region corresponding to a beam footprint described by $(C_b, R_b) = \left( 0.8 \cdot e^{j\frac{2\pi}{12}}, 0.7 \right).$ Reconfigured beams are plotted in dashed lines and their centers are represented as round markers on Fig. 8a.

First Beam 1 is identified as corresponding to the abnormal situation region, and a reconfigured Beam 1 is determined using the proposed methods for reconfiguring the beam identified as corresponding to the abnormal situation region described above with reference to Fig. 7b. This provides the following results: $C'_1 = C_b$=0.6928 + 0.4000i and $R'_1 = R_b$=0.7, computed with a=1.

Then a first first ring beam is configured (on Fig. 8a Beam 2), also using the above-described methods, which provides the following results: $(C'_2, R'_2)$=(1.9437, 0.8236), computed with $\theta_{\min} = \frac{2\pi}{6}$

As to the reconfiguration of the first ring beams Beam i, i = 3 - 7, for i = 3 the following points are determined:

- The intersection point of circles representing Beam 1' and Beam 2' closest to point $C_2$ is point A in Fig. 8a;
- The intersection point of circles representing Beam 2' and the lowest-index beam on the second ring neighboring Beam3 (that is, Beam 9) closest to point $C_3$ is point B in Fig. 8a;
- The two intersection points of circles representing the beams on the second ring neighboring Beam 3 (that is, Beam 9, Beam 10 and Beam 11) closest to point $C_3$ are points C and D in Fig. 8a;
- The smallest enclosing circle containing points A,B, C and D is $(C'_3, R'_3)$ = (1.2133+1.5694i, 0.9933).

The following first ring beams (i = 4 - 7) are reconfigured according to the same scheme, leading to respective values $(C'_i, R'_i)$ reported in the outlined portion of Table 1 below.

In this first example, the reconfiguration is tested as valid with a predefined dmin value equal to R.

[Table 1]

| $i$ | $C_i$ | $R_i$ | $C'_i$ | $R'_i$ |
|---|---|---|---|---|
| 1 | 0.0000 + 0.0000i | 1 | 0.6928 + 0.4000i | 0.7000 |

(continued)

| i | Ci | Ri | C'i | R'i |
|---|---|---|---|---|
| 2 | 1.7321 + 0.0000i | 1 | 1.9437 + 0.0000i | 0.8236 |
| 3 | 0.8660 + 1.5000i | 1 | 1.2133 + 1.5694i | 0.9933 |
| 4 | -0.8660 + 1.5000i | 1 | -0.6742 + 1.5159i | 1.1633 |
| 5 | -1.7321 + 0.0000i | 1 | -1.2909 + 0.0399i | 1.4143 |
| 6 | -0.8660 - 1.5000i | 1 | -0.6579 - 1.1396i | 1.3763 |
| 7 | 0.8660 - 1.5000i | 1 | 0.7936 - 1.3199i | 1.1824 |
| 8 | 3.4641 + 0.0000i | 1 | 3.4641 + 0.0000i | 1 |
| 9 | 2.5981 + 1.5000i | 1 | 2.5981 + 1.5000i | 1 |
| 10 | 1.7321 + 3.0000i | 1 | 1.7321 + 3.0000i | 1 |
| 11 | 0.0000 + 3.0000i | 1 | 0.0000 + 3.0000i | 1 |
| 12 | -1.7321 + 3.0000i | 1 | -1.7321 + 3.0000i | 1 |
| 13 | -2.5981 + 1.5000i | 1 | -2.5981 + 1.5000i | 1 |
| 14 | -3.4641 + 0.0000i | 1 | -3.4641 + 0.0000i | 1 |
| 15 | -2.5981 - 1.5000i | 1 | -2.5981 - 1.5000i | 1 |
| 16 | -1.7321 - 3.0000i | 1 | -1.7321 - 3.0000i | 1 |
| 17 | -0.0000 - 3.0000i | 1 | -0.0000 - 3.0000i | 1 |
| 18 | 1.7321 - 3.0000i | 1 | 1.7321 - 3.0000i | 1 |
| 19 | 2.5981 - 1.5000i | 1 | 2.5981 - 1.5000i | 1 |

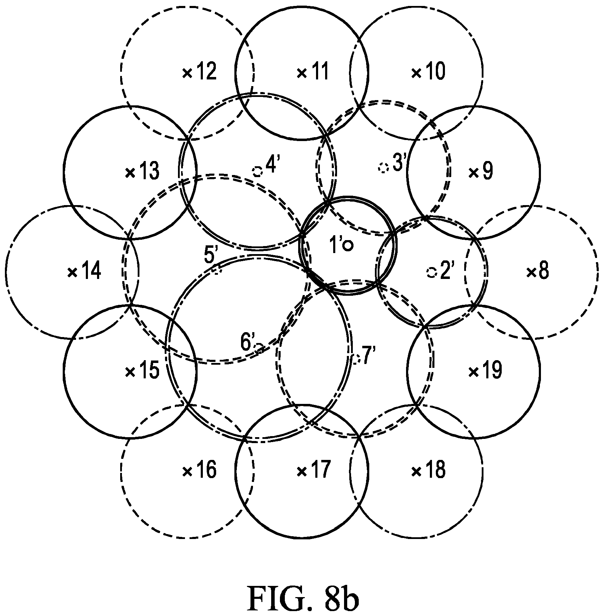

Another example of satellite footprint reconfiguration according to the above scheme for a satellite footprint using 3 colors is given in Fig. 8b.

When the scheme for determining reconfigured beams is the same as the one applied in the numerical example of Example 1 (however applied to a 3 color satellite footprint configuration), the reconfigured satellite footprint of Fig. 8b is obtained.

In contrast to Example 1, the validity test of the reconfigured footprint (performed with dmin = 0) fails since $abs(C'_5 - C'_7) < R'_5 + R'_7$, beams 5 and 7 having the same color overlap.

In this case, the 1st ring beam reconfiguration is reiterated with an initial choice of $C'_1 = 0.7 \cdot e^{j\frac{2\pi}{12}}$ (closer to $C_1$ than for the previous iteration), and $R'_2 = 0.8$ larger than the initial choice.

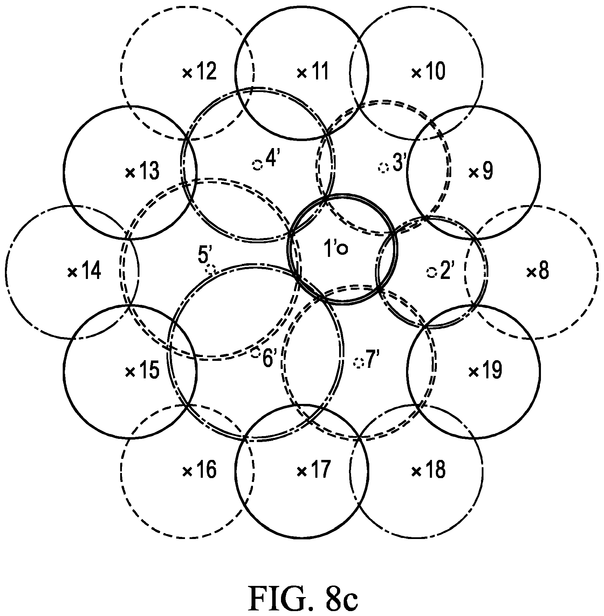

Another determination of reconfigured beams provides the values reported in Table 2 below. Only values for the re-adjusted beams are reported in Table 2. The re-adjusted footprint corresponding to the values set forth in Table 2 is shown on Fig. 8c. Another validity test performed for these reconfigured beams determined at this second iteration leads to a positive result for $d_{min} = 0$.

[Table 2]

| i | C'i | R'i |
|---|---|---|
| 1 | 0.6062 + 0.3500i | 0.8000 |
| 2 | 1.9403 + 0.0000i | 0.8262 |
| 3 | 1.2181 + 1.5744i | 0.9903 |
| 4 | 0.6729 + 1.6007i | 1.1319 |
| 5 | -1.3769 + 0.0469i | 1.3380 |
| 6 | -0.7046 - 1.2204i | 1.2897 |

(continued)

| i | C'i | R'i |
|---|-----|-----|
| 7 | 0.8537 - 1.3580i | 1.1421 |

Methods of resource re-allocation will now be described with reference to the exemplary resource planning illustrated on Fig. 9a.

Fig. 9a shows an exemplary resource planning for a the total bandwidth of the integrated system noted $B_{tot}$, which includes frequency and/or polarization resources. The skilled person would understand that even though some resources are represented as neighboring on Fig. 9a, the present subject disclosure is not limited thereto and resources included in the total bandwidth $B_{tot}$ are not necessarily neighboring in the frequency domain.

Satellite beams can use $N_{colors}$ different colors for their frequency reuse pattern. The total bandwidth $B_{sat}$ used by the satellite network component for its fixed footprint coverage in normal operating mode is $B_{sat} = \sum_{i=1}^{N_{colors}} B_{beam_i}$ where $B_{beam_i}$ is the bandwidth used by beams having the i-th color, with $B_{sat} \leq B_{tot}$. In embodiments where beams have the same bandwidth $B_{beam}$, $B_{sat} = N_{colors}B_{beam}$.

As shown on Fig. 9a, each set of resources used by a beam of a predefined color $B_{beam_i}$ can in some embodiments be split into a part $B'_{beam_i}$ always allocated to the satellite beam and a part of reconfigurable satellite resources $B'_{r_i} \geq 0$. Depending on the embodiment, the utilization of reconfigurable satellite resources will differ as a function of the presence and/or of the importance of a abnormal situation region. $B'_{r_i}$ is represented in bold lines in the example illustrated on Fig. 9a. The use of these resources can be reconfigured in case of disaster, for example re-allocated to the beam serving the abnormal situation area. The two subset of resources are defined such that $B'_{beam_i} + B'_{r_i} = B_{beam_i}$.

Let us define as terrestrial-only resources those resources where only terrestrial service exists and where there is no satellite-terrestrial coexistence. We denote by $B_{TO}$ the bandwidth corresponding to terrestrial-only resources of size $B_{TO} \geq 0$.

We define reserved resources having a bandwidth $B_r$ the utilization of which will differ in function of the presence and/or of the importance of a abnormal situation region, as it will be described in the following. The bandwidth $B_r$ satisfies the inequation $B_r \geq 0$.

When $B_{TO}>0$, a specific range of resources is used only by the terrestrial network component, and this range does not experience interference from the satellite component regardless of the terrestrial wireless coverage location (e.g. even for terrestrial network component coverage areas situated at beam border). For a cellular terrestrial network component, interference may come only from the neighboring terrestrial cells and is managed within the terrestrial network component (for example by employing ICIC (inter-cell interference coordination) or CoMP (coordinated multi-point) methods).

The existence of $B_{TO}>0$ therefore results in reduced inter-component interference suffered by the terrestrial network component in those terrestrial network component coverage areas located at beam borders because inter-component interference is present on a lower percentage of the terrestrial network component bandwidth.

However $B_{TO}>0$ reduces the effective frequency range of satellite services $B_{sat}$, and as a consequence the satellite network component capacity, without any other benefits for the satellite network component. The existence and size of $B_{TO}$ will typically be decided in the early stages of the integrated satellite-terrestrial network design, based on interference profiles, expected satellite traffic in full load and a tradeoff between terrestrial network component performance and satellite network component capacity.

Reconfigurable satellite resources $B'_r$ and reserved resources $B_r$ are resources that can be flexibly re-allocated in case of an abnormal situation (e.g. an emergency situation or a disaster situation), as shown on Fig. 9b.

In the exemplary case where an abnormal situation has been detected in Beam 1 (referring to the satellite beam numbering of Fig. 2), reconfigurable satellite resources $B'_r$ of all neighboring beams (Beams 2-7, 1st ring of beams around the beam serving the abnormal situation area) may in some embodiments be partly or fully re-allocated to Beam 1 serving the abnormal situation area, in order to increase the capacity of the beam. In some embodiments, no re-allocation may be performed for the other beams (e.g. beams 8-19 in Fig. 2 or other beams not depicted in Fig. 2). This reduces the impact of the abnormal situation management methods of the present subject disclosure to the area neighboring the abnormal situation area (e.g. the disaster area), without any large scale impact at network level.

In some embodiments, reserved resources $B_r$ used by the terrestrial component in the beam serving the abnormal situation area can be partly or fully re-allocated to the satellite component in Beam 1 serving the abnormal situation area, in order to increase the capacity of the beam. In some embodiments, no re-allocation may be performed for the other beams, to reduce the impact of the disaster management method for the rest of the network.

In some embodiments, reconfigurable satellite resources $B'_r$ and reserved resources $B_r$ may be used in other manners by the network when no emergency situation is detected. For example, reconfigurable satellite resources $B'_r$ may be used as shown on Fig. 9a. For example, reserved resources $B_r$ are used by the terrestrial network component. Since these resources are likely to be dynamically re-allocated in case of occurrence of an abnormal situation, the terrestrial network component should refrain from using $B_r$ for transferring any system or control information (both in uplink and in downlink) and use it for physical channel communication only. For instance, if the terrestrial network component uses LTE-Advanced, carrier aggregation can be used and one of the carrier s can span Br and never carry Layer 1 control signaling (Physical Downlink Control Channel, PDCCH).

The amount of reconfigurable satellite resources $B'_r$ and reserved resources $B_r$ must be large enough to ensure that the traffic generated by typical abnormal situations can be handled by the network without capacity outage. On the other hand, using an important amount of reserved resources reduces the effective frequency range of satellite services $B_{sat}$ thus the satellite network component capacity, without any other benefits for the satellite network component in normal operating mode. Using an important amount of reconfigurable satellite resources reduces the capacity of neighboring beams in case of occurrence of an abnormal situation. In the early stages of the integrated satellite-terrestrial network design, the amount of reserved resources $B_r$ and the amount of reconfigurable satellite resources is determined based on the estimated traffic load in emergency situations the network is designed to cope with, and on a trade-off between the amount of extra-capacity that can be dynamically allocated in case of emergency and the satellite component capacity in normal operating mode.

Fig. 9c is a flowchart that illustrates a ressource re-allocation scheme proposed by the present subject disclosure in the case of occurrence of an abnormal situation.

Once the beam covering the abnormal situation area is identified, its capacity needs are assessed (90).

The capacity needs of 1st ring beams neighboring the beam serving the abnormal situation area are also assessed (91).

Based on these two assessments, a determination is made (92) as to whether part or all of the reconfigurable satellite resources $B'_r$, and/or part or all of reserved resources $B_r$ are to be re-allocated to the beam serving the abnormal situation area.

In some embodiments, requests to re-schedule attached users so as to free up the resources to be re-allocated are generated and transmitted to the satellite network component and/or terrestrial network component.

Depending on the network node in which the ressource re-allocation scheme is performed, the satellite network component may in some embodiments be informed that the beam serving the abnormal situation area can start using the newly re-allocated ressources.

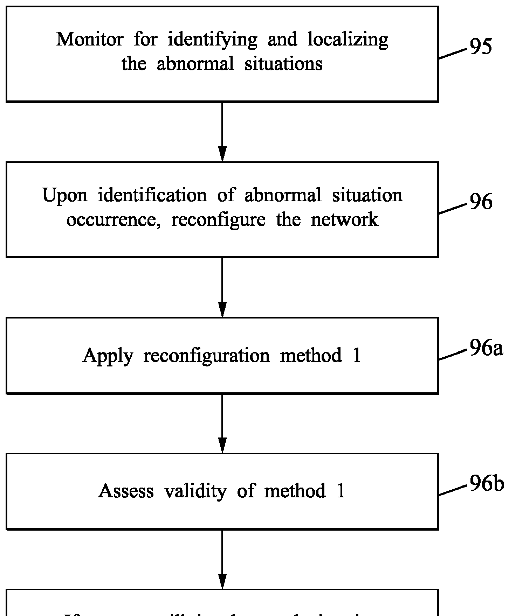

Fig. 10 illustrates a method of managing an abnormal situation according to another embodiment of the present subject disclosure.

A network controller of an integrated satellite-terrestrial network implementing this method may be configured to monitor for identifying and localizing abnormal situations (95).

In some embodiments, the network controller may be configured to identify the existence of a disaster/emergency situation based on an identification of a disaster region composed of several geographically close terrestrial cells suffering overload and/or failure; an increased satellite traffic demand in the beam or beams where the disaster region is located; and/or a slightly increased satellite traffic demand in one or several beams neighboring a beam containing a disaster region. The network controller may then compute a center and radius of the disaster area (Cb, Rb) based on the location of the cells in the disaster region and/or of the number of users attached to these cells before the disaster occurred. Various schemes for performing such identification, decision, and computation are described above in reference to other embodiments of the present subject disclosure.

The network controller may be further configured to, upon identification of an abnormal situation occurrence, reconfigure the integrated satellite-terrestrial network (96).

In one or more embodiments, the network controller may be configured to perform a first method of network reconfiguration (96a) (for example a satellite footprint reconfiguration), and then assess (96b) the effectiveness of the first method in addressing the abnormal situation and its consequences on the integrated satellite-terrestrial network. In embodiments where a new footprint is deployed, the order of beam deployment may be chosen to minimize the number of dropped users.

If the effectiveness of the first method in addressing the abnormal situation (for example if the abnormal operating mode of the network pertains, or if the terrestrial network component is still in outage), the network controller may be configured to perform a second method of network reconfiguration (96c) (for example a resource re-allocation method).

In one or more embodiments, the network controller may be configured to first perform the second method of network reconfiguration (for example a resource re-allocation method), and then assess the effectiveness of the second method in addressing the abnormal situation and its consequences on the integrated satellite-terrestrial network.

If the second method in addressing the abnormal situation is not effective, the network controller may be configured to perform the first method of network reconfiguration (for example a satellite footprint reconfiguration).

Depending on the preconfigured first and second methods of network reconfiguration, the order of performing the methods may be determined in order to avoid heavy network reconfiguration in the case of light abnormal situation occurrence, or else to allow an optimized response of the network to manage the disaster situation.

In some embodiments, the network controller may be further configured to monitor the network for identifying the end of a disaster situation. For example, the network controller may be configured to monitor for network indicators showing the end of the disaster (reports from the terrestrial cells in the disaster region or manual command to come back to normal operating mode). Users connected to the satellite component may also periodically monitor for the existence of a terrestrial link. When a terrestrial link becomes available, they may proceed to a handover towards the terrestrial link. In some embodiments, the network controller may be configured to decide the end of the disaster situation depending on the number of cells in the disaster region sending normal operating reports with increasing number of users. In other embodiments, the network controller may be configured to decide the end of the disaster situation when the number of users connected to the satellite component is durably decreasing.

In some embodiments, the network controller may be further configured to request the satellite and/or terrestrial network components to return to a default or normal operating mode. Preferably, return to normal mode will be performed by avoiding high interference occurrence. If extra resource has been allocated to the beam serving the disaster area, those resources may be released first by user rescheduling. Thereafter, terrestrial and satellite components may be informed to start re-using released resources. When deploying the default footprint, the order of beam deployment may also be chosen to minimize the number of dropped users.

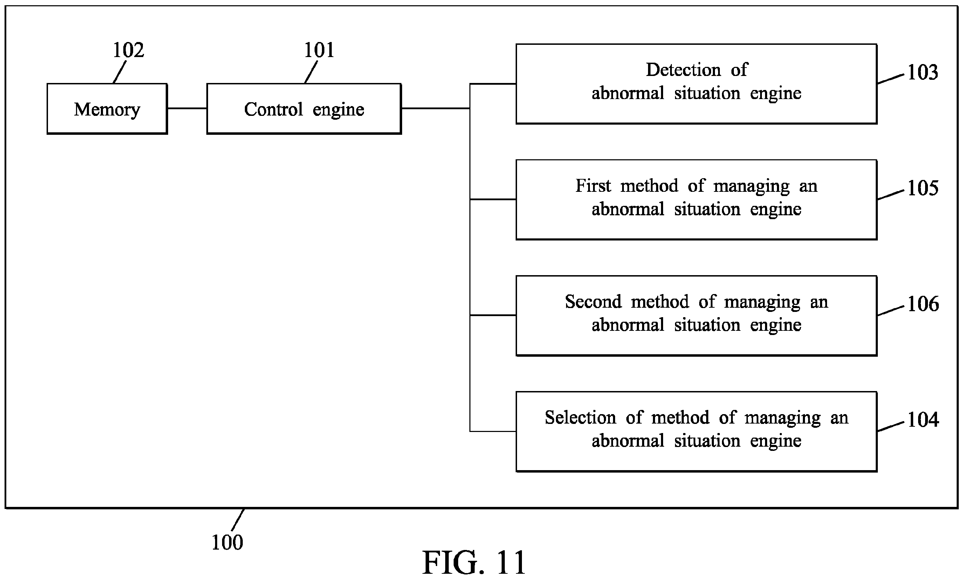

Fig. 11 illustrates an exemplary network node 100 in an integrated satellite-terrestrial network configured to implement an integrated satellite-terrestrial network management feature in accordance with embodiments of the present subject disclosure.

The network node 100 includes a control engine 101, a detection of abnormal situation engine 103, a selection of method of managing an abnormal situation engine 104, a first method of managing an abnormal situation engine 105, a second method of managing an abnormal situation engine 106, and a memory 102.

In the architecture illustrated on Fig. 11, all of the detection of abnormal situation engine 103, selection of method of managing an abnormal situation engine 104, first method of managing an abnormal situation engine 105, second method of managing an abnormal situation engine 106, and memory 102 are operatively coupled with one another through the control engine 101.

The detection of abnormal situation engine 103 may be configured to provide a detection of abnormal situation function according to the schemes for detecting an abnormal situation described above with respect to embodiments of the present subject disclosure. The detection of abnormal situation engine 103 may be further configured to, upon detection of an abnormal situation, provide the control engine 101 with a signal indicating occurrence of an abnormal situation.

The selection of method of managing an abnormal situation engine 104 may be configured to provide a selection of method of managing an abnormal situation function, for selecting a method of managing an abnormal situation function, in the non-limiting example illustrated on Fig. 11 where more than one method of managing an abnormal situation are available at the network node 100. In some embodiments, the selection of method of managing an abnormal situation engine 104 may be configured so that the first method of managing an abnormal situation to be applied is pre-determined. The second method of managing an abnormal situation to be applied, if available, may also be pre-determined, in which case the selection of method of managing an abnormal situation engine 104 may be configured to provide an order of performance of available methods of managing an abnormal situation.

The first method of managing an abnormal situation engine 105 may provide a first method of managing an abnormal situation function, such as one of the satellite footprint reconfiguration schemes described above.

The second method of managing an abnormal situation engine 106 may provide a second method of managing an abnormal situation function, such as one of the resource re-allocation schemes described above.

The control engine 101 includes a processor, which may be any suitable microprocessor, microcontroller, Field Programmable Gate Arrays (FPGA), Application Specific Integrated Circuits (ASIC), Digital Signal Processing chip, and/or state machine, or a combination thereof. The control engine 101 may also comprise, or may be in communication with, computer storage media, such as, without limitation, the memory 102, capable of storing computer program instructions or software code that, when executed by the processor, cause the processor to perform the elements described herein. In addition, the memory 102 may be any type of data storage computer storage medium coupled to the control engine 101 and capable of storing computation results of the various schemes described herein for some embodiments.

It will be appreciated that the network node 100 shown and described with reference to Fig. 11 is provided by way of example only. Numerous other architectures, operating environments, and configurations are possible. Other embodiments of the node may include fewer or greater number of components, and may incorporate some or all of the functionality described with respect to the network node components shown in Fig. 11. Accordingly, although the control engine 101, detection of abnormal situation engine 103, selection of method of managing an abnormal situation engine 104, first method of managing an abnormal situation engine 105, second method of managing an abnormal situation engine 106, and memory 102 are illustrated as part of the network node 100, no restrictions are placed on the location and control of components 101-106. In particular, in other embodiments, components 101-106 may be part of different entities or computing systems.

In addition, in some embodiments, the network node 100 may be comprised in a network controller as described above, adapted for communicating with the terrestrial network component and with the satellite network component, and included in some embodiments in a core network of the integrated satellite-terrestrial network.

While the invention has been described with respect to preferred embodiments, those skilled in the art will readily appreciate that various changes and/or modifications can be made to the invention without departing from the scope of the invention as defined by the appended claims.

Although this invention has been disclosed in the context of certain preferred embodiments, it should be understood that certain advantages, features and aspects of the systems, devices, and methods may be realized in a variety of other embodiments. Additionally, it is contemplated that various aspects and features described herein can be practiced separately, combined together, or substituted for one another, and that a variety of combination and subcombinations of the features and aspects can be made and still fall within the scope of the invention. Furthermore, the systems and devices described above need not include all of the modules and functions described in the preferred embodiments.

Information and signals described herein can be represented using any of a variety of different technologies and techniques. For example, data, instructions, commands, information, signals, bits, symbols, and chips can be represented by voltages, currents, electromagnetic waves, magnetic fields or particles, optical fields or particles, or any combination thereof.

Depending on the embodiment, certain acts, events, or functions of any of the methods described herein can be performed in a different sequence, may be added, merged, or left out all together (e.g., not all described acts or events are necessary for the practice of the method). Moreover, in certain embodiments, acts or events may be performed concurrently rather than sequentially.

## Claims

1. Method for managing an integrated satellite-terrestrial network, the integrated satellite-terrestrial network comprising a terrestrial network component, and a satellite network component transmitting a plurality of satellite beams, forming a satellite full coverage pattern, the method comprising:

   - detecting (50) the occurrence of an abnormal situation based on a change in a traffic load of the terrestrial network component and/or the satellite network component,
   - performing (51) a first method of managing the abnormal situation, wherein the first method of managing the abnormal situation comprises:
   - determining parameters ($C_b$, $R_b$) of a target beam footprint defining a circular region covering at least partially an area of occurrence of the abnormal situation;
   - identifying a first beam among the plurality of satellite beams transmitted by the satellite network component whose footprint corresponds to the circular region;
   - identifying all second beams whose footprint neighbors the first beam;
   - determining parameters for a reconfigured first beam footprint based on the parameters defining the circular region;
   - determining parameters for reconfigured second beams footprints based on the parameters determined for the reconfigured first beam;
   - transmitting to the satellite network component a beam reconfiguration request for reconfiguring at least the first satellite beam ($C_i$, $R_i$) and the second satellite beams transmitted by the satellite network component according to the parameters determined for the reconfigured first beam and second beams footprints.

2. Method according to claim 1, wherein the detecting the occurrence of an abnormal situation comprises the detecting of a change in a traffic load of the terrestrial network component beyond a predetermined terrestrial traffic load threshold.

3. Method according to any of claims 1 and 2, wherein the detecting the occurrence of an abnormal situation comprises the detecting of an increase of a traffic load of the satellite network component beyond a predetermined satellite traffic load threshold.

4. Method according to any of the preceding claims, further comprising: transmitting to the terrestrial network component a request for reconfiguring the terrestrial network component generated based on the beam reconfiguration request.

5. Method according to claim 1, wherein a plurality of methods of managing the abnormal situation is available in the integrated satellite-terrestrial network, and wherein the method further comprises: selecting the first method of managing the abnormal situation among the plurality of methods of managing the abnormal situation available in the integrated satellite-terrestrial network.

6. Method according to claim 5, further comprising: selecting a second method of managing the abnormal situation among the plurality of methods of managing the abnormal situation available in the integrated satellite-terrestrial network, and performing the second method of managing the abnormal situation.

7. Method according to claim 6, wherein the second method of managing the abnormal situation uses a reconfiguration of resources of the integrated satellite-terrestrial network.

8. Method according to any of the preceding claims, further comprising: determining a center $C_b$ and a radius $R_b$ of the circular region; determining a center $C'_i$ and a radius $R'_i$ of the reconfigured first beam based on the center $C_b$ and radius $R_b$ of the circular region, respectively.

9. A network node of an integrated satellite-terrestrial network comprising a terrestrial network component and a satellite network component transmitting at least one satellite beam, the network node comprising a processor, a memory, operatively coupled to the processor, wherein the network node is configured to perform a method for managing the integrated satellite-terrestrial network according to any of claims 1 to 8.

10. The network node of claim 9, wherein the network node is comprised in a network controller adapted for communicating with the terrestrial network component and with the satellite network component.

11. A non-transitory computer-readable medium encoded with executable instructions which, when executed, causes a network node comprising a processor operatively coupled with a memory, to perform a method for managing an integrated satellite-terrestrial network according to any of claims 1 to 8.

12. A computer program product comprising computer program code tangibly embodied in a computer readable medium, said computer program code comprising instructions to, when provided to a computer system and executed, cause said computer to perform a method for managing an integrated satellite-terrestrial network according to any of claims 1 to 8.

**Patentansprüche**

1. Verfahren zur Verwaltung eines integrierten satellitengestützten-terrestrischen Netzwerks, wobei das integrierte satellitengestützte-terrestrische Netzwerk eine terrestrische Netzwerkkomponente und eine satellitengestützte Netzwerkkomponente, die eine Mehrzahl von Satellitenstrahlen sendet, die ein satellitengestütztes vollständiges Abdeckungsmuster ausbilden, umfasst, wobei das Verfahren umfasst:

- Erkennen (50) des Auftretens einer anormalen Situation basierend auf einer Änderung einer Verkehrsbelastung der terrestrischen Netzwerkkomponente und/oder der satellitengestützten Netzwerkkomponente,
- Durchführen (51) eines ersten Verfahrens zur Bewältigung der anormalen Situation, wobei das erste Verfahren zur Bewältigung der anormalen Situation umfasst:
- Bestimmen von Parametern ($C_b$, $R_b$) eines Fußabdrucks eines Zielstrahls, der einen kreisförmigen Bereich definiert, der wenigstens teilweise eine Fläche des Auftretens der anormalen Situation abdeckt;
- Ermitteln eines ersten Strahls aus der Mehrzahl von Satellitenstrahlen, die durch die satellitengestützte Netzwerkkomponente gesendet werden, dessen Fußabdruck dem kreisförmigen Bereich entspricht;
- Ermitteln aller zweiten Strahlen, deren Fußabdruck dem ersten Strahl benachbart ist;
- Bestimmen von Parametern für einen Fußabdruck eines neu konfigurierten ersten Strahls basierend auf den Parametern, die den kreisförmigen Bereich definieren;
- Bestimmen von Parametern für Fußabdrücke neu konfigurierter zweiter Strahlen basierend auf den Parametern, die für den neu konfigurierten ersten Strahl bestimmt wurden;
- Senden - an die satellitengestützte Netzwerkkomponente - einer Strahlneukonfigurationsanforderung zum Neukonfigurieren wenigstens des ersten Satellitenstrahls (Ci, Ri) und der zweiten Satellitenstrahlen, die durch die satellitengestützte Netzwerkkomponente gesendet werden, gemäß den Parametern, die für die Fußabdrücke des/r neu konfigurierten ersten Strahls und zweiten Strahlen bestimmt wurden.

2. Verfahren nach Anspruch 1, wobei das Erkennen des Auftretens einer anormalen Situation das Erkennen einer Änderung einer Verkehrsbelastung der terrestrischen Netzwerkkomponente über einen vorgegebenen Belastungsschwellenwert für den terrestrischen Verkehr umfasst.

3. Verfahren nach einem der Ansprüche 1 und 2, wobei das Erkennen des Auftretens einer anormalen Situation das Erkennen einer Zunahme einer Verkehrsbelastung der satellitengestützten Netzwerkkomponente über einen vorgegebenen Belastungsschwellenwert für den satellitengestützten Verkehr umfasst.

4. Verfahren nach einem der vorangehenden Ansprüche, ferner umfassend: Senden - an die terrestrische Netzwerkkomponente - einer Anforderung zum Neukonfigurieren der terrestrischen Netzwerkkomponente, die basierend auf der Strahlneukonfigurationsanforderung erzeugt wird.

5. Verfahren nach Anspruch 1, wobei eine Mehrzahl von Verfahren zur Bewältigung der anormalen Situation in dem integrierten satellitengestützten-terrestrischen Netzwerk verfügbar ist und wobei das Verfahren ferner umfasst: Auswählen des ersten Verfahrens zur Bewältigung der anormalen Situation aus der Mehrzahl von Verfahren zur Bewältigung der anormalen Situation, die in dem integrierten satellitengestützten-terrestrischen Netzwerk verfügbar sind.

6. Verfahren nach Anspruch 5, ferner umfassend: Auswählen eines zweiten Verfahrens zur Bewältigung der anormalen Situation aus der Mehrzahl von Verfahren zur Bewältigung der anormalen Situation, die in dem integrierten satellitengestützten-terrestrischen Netzwerk verfügbar sind, und Durchführen des zweiten Verfahrens zur Bewältigung der anormalen Situation.

7. Verfahren nach Anspruch 6, wobei das zweite Verfahren zur Bewältigung der anormalen Situation eine Neukonfiguration von Ressourcen des integrierten satellitengestützten-terrestrischen Netzwerks verwendet.

8. Verfahren nach einem der vorangehenden Ansprüche, ferner umfassend: Bestimmen eines Mittelpunkts $C_b$ und eines Radius $R_b$ des kreisförmigen Bereichs; Bestimmen eines Mittelpunkts $C'_i$ und eines Radius $R'_i$ des neu konfigurierten ersten Strahls basierend auf dem Mittelpunkt $C_b$ bzw. dem Radius $R_b$ des kreisförmigen Bereichs.

9. Netzwerkknoten eines integrierten satellitengestützten-terrestrischen Netzwerks, das eine terrestrische Netzwerkkomponente und eine satellitengestützte Netzwerkkomponente, die wenigstens einen Satellitenstrahl sendet, umfasst, wobei der Netzwerkknoten einen Prozessor und einen mit dem Prozessor wirkgekoppelten Speicher umfasst, wobei der Netzwerkknoten dazu ausgestaltet ist, ein Verfahren zur Verwaltung des integrierten satellitengestützten-terrestrischen Netzwerks nach einem der Ansprüche 1 bis 8 durchzuführen.

10. Netzwerkknoten nach Anspruch 9, wobei der Netzwerkknoten in einer Netzwerksteuereinrichtung inbegriffen ist, die zum Kommunizieren mit der terrestrischen Netzwerkkomponente und mit der satellitengestützten Netzwerkkomponente ausgelegt ist.

11. Nichtflüchtiges computerlesbares Medium, das mit ausführbaren Anweisungen codiert ist, die, wenn sie ausgeführt werden, bewirken, dass ein Netzwerkknoten, der einen mit einem Speicher wirkgekoppelten Prozessor umfasst, ein Verfahren zur Verwaltung eines integrierten satellitengestützten-terrestrischen Netzwerks nach einem der Ansprüche 1 bis 8 durchführt.

12. Computerprogrammprodukt, das einen Computerprogrammcode umfasst, der greifbar in einem computerlesbaren Medium verkörpert ist, wobei der Computerprogrammcode Anweisungen umfasst, um, wenn sie einem Computersystem bereitgestellt und ausgeführt werden, zu bewirken, dass der Computer ein Verfahren zur Verwaltung eines integrierten satellitengestützten-terrestrischen Netzwerks nach einem der Ansprüche 1 bis 8 durchführt.

**Revendications**

1. Procédé pour gérer un réseau satellitaire-terrestre intégré, le réseau satellitaire-terrestre intégré comprenant un composant de réseau terrestre, et un composant de réseau satellitaire transmettant une pluralité de faisceaux satellitaires, formant un diagramme de couverture complète satellitaire, le procédé comprenant :

- la détection (50) de la survenue d'une situation anormale sur la base d'un changement d'une charge de trafic du composant de réseau terrestre et/ou du composant de réseau satellitaire,
- la réalisation (51) d'un premier procédé de gestion de la situation anormale, dans lequel le premier procédé de gestion de la situation anormale comprend :
- la détermination de paramètres ($C_b$, $R_b$) d'une empreinte de faisceau cible définissant une région circulaire couvrant au moins partiellement une zone de survenue de la situation anormale ;
- l'identification d'un premier faisceau parmi la pluralité de faisceaux satellitaires transmis par le composant de réseau satellitaire dont l'empreinte correspond à la région circulaire ;
- l'identification de tous les seconds faisceaux dont l'empreinte avoisine le premier faisceau ;
- la détermination de paramètres pour une empreinte de premier faisceau reconfiguré sur la base des paramètres définissant la région circulaire ;
- la détermination de paramètres pour des empreintes de seconds faisceaux reconfigurés sur la base des paramètres déterminés pour le premier faisceau reconfiguré ;
- la transmission, au composant de réseau satellitaire, d'une demande de reconfiguration de faisceau pour reconfigurer au moins le premier faisceau satellitaire (Ci, Ri) et les seconds faisceaux de satellitaire transmis par le composant de réseau satellitaire selon les paramètres déterminés pour les empreintes de premier faisceau et de seconds faisceaux reconfigurés.

2. Procédé selon la revendication 1, dans lequel la détection de la survenue d'une situation anormale comprend la détection d'un changement d'une charge de trafic du composant de réseau terrestre au-delà d'un seuil prédéterminé de charge de trafic terrestre.

3. Procédé selon l'une quelconque des revendications 1 et 2, dans lequel la détection de la survenue d'une situation anormale comprend la détection d'une augmentation d'une charge de trafic du composant de réseau satellitaire au-delà d'un seuil prédéterminé de charge de trafic satellitaire.

4. Procédé selon une quelconque des revendications précédentes, comprenant en outre : la transmission, au composant de réseau terrestre, d'une demande pour reconfigurer le composant de réseau terrestre généré sur la base de la demande de reconfiguration de faisceau.

5. Procédé selon la revendication 1, dans lequel une pluralité de procédés de la gestion de la situation anormale est disponible dans le réseau satellitaire-terrestre intégré, et dans lequel le procédé comprend en outre : la sélection du premier procédé de gestion de la situation anormale parmi la pluralité de procédés de la gestion de la situation anormale disponible dans le réseau satellitaire-terrestre intégré.

6. Procédé selon la revendication 5, comprenant en outre : la sélection d'un second procédé de gestion de la situation anormale parmi la pluralité de procédés de la gestion de la situation anormale disponible dans le réseau satellitaire-terrestre intégré, et la réalisation du second procédé de gestion de la situation anormale.

7. Procédé selon la revendication 6, dans lequel le second procédé de gestion de la situation anormale utilise une reconfiguration de ressources du réseau satellitaire-terrestre intégré.

8. Procédé selon une quelconque des revendications précédentes, comprenant en outre : la détermination d'un centre $C_b$ et d'un rayon $R_b$ de la région circulaire ; la détermination d'un centre $C'_i$, et d'un rayon $R'_i$, du premier faisceau reconfiguré sur la base du centre $C_b$ et du rayon $R_b$ de la région circulaire, respectivement.

9. Noeud de réseau d'un réseau satellitaire-terrestre intégré, comprenant un composant de réseau terrestre et un composant de réseau satellitaire transmettant au moins un faisceau satellitaire, le noeud de réseau comprenant un processeur, une mémoire, fonctionnellement couplée au processeur, dans lequel le noeud de réseau est configuré pour réaliser un procédé pour gérer le réseau satellitaire-terrestre intégré selon l'une quelconque des revendications 1 à 8.

10. Noeud de réseau selon la revendication 9, dans lequel le noeud de réseau est compris dans un dispositif de commande de réseau adapté pour communiquer avec le composant de réseau terrestre et avec le composant de réseau satellitaire.

**11.** Support non transitoire lisible par ordinateur encodé avec des instructions exécutables qui, lorsqu'elles sont exécutées, font en sorte qu'un noeud de réseau comprenant un processeur fonctionnellement couplé à une mémoire, réalise un procédé pour gérer un réseau satellitaire-terrestre intégré selon l'une quelconque des revendications 1 à 8.

**12.** Produit programme d'ordinateur, comprenant un code de programme d'ordinateur incorporé de façon tangible dans un support lisible par ordinateur, ledit code de programme d'ordinateur comprenant des instructions pour, lorsqu'elles sont fournies à un système d'ordinateur et exécutées, faire en sorte que ledit ordinateur réalise un procédé pour gérer un réseau satellitaire-terrestre intégré selon l'une quelconque des revendications 1 à 8.

FIG. 1

FIG. 2

| Satellite (Bsat1) | Terrestrial (Bter1) | | Beam using color 1 |
|---|---|---|---|
| Terrestrial (Bter2) | Satellite (Bsat2) | Terrestrial (Bter2) | Beam using color 2 |
| Terrestrial (Bter3) | Satellite (Bsat3) | Terrestrial (Bter3) | Beam using color 3 |
| Terrestrial (Bter4) | | Satellite (Bsat4) | Beam using color 4 |

## FIG. 3

EP 3 293 891 B1

```
┌─────────────────────────────┐
│    Detection  of  occurrence │
│    of  abnormal  situation   │──50
└─────────────────────────────┘
              │
              ▼
┌─────────────────────────────┐
│   Perform  a  first  method  │
│   of  managing  the  abnormal│──51
│           situation          │
└─────────────────────────────┘
              │
              ▼
┌─────────────────────────────┐
│          Determine           │
│   a  target  beam  footprint │──51a
└─────────────────────────────┘
              │
              ▼
┌─────────────────────────────┐
│  Transmit  a  beam  reconfiguration │
│  request  for  configuring  a  beam │──51b
│  according  to  the target  beam    │
│            footprint                │
└─────────────────────────────┘
```

# FIG. 4

```
┌─────────────────────────────┐
│   Detection of occurrence   │── 60
│   of an abnormal situation  │
└─────────────────────────────┘
              │
              ▼
┌─────────────────────────────┐
│  Selection of first method of│── 61
│   managing the abnormal      │
│        situation             │
└─────────────────────────────┘
              │
              ▼
┌─────────────────────────────┐
│   Perform the first method  │── 62
│   of managing the abnormal  │
│        situation            │
└─────────────────────────────┘
              │
              ▼
┌─────────────────────────────┐
│         Determine           │── 62a
│    a target beam footprint  │
└─────────────────────────────┘
              │
              ▼
┌─────────────────────────────┐
│ Generate a beam reconfiguration│── 62b
│  request for configuring a beam│
│   according to the target beam │
│          footprint          │
└─────────────────────────────┘
```

# FIG. 5a

```
┌─────────────────────────────────┐
│   Detection of occurrence        │──60
│   of an abnormal situation       │
└─────────────────────────────────┘
              │
              ▼
┌─────────────────────────────────┐
│   Selection of first method of   │──61
│   managing the abnormal          │
│   situation                      │
└─────────────────────────────────┘
              │
              ▼
┌─────────────────────────────────┐
│   Perform the first method       │──62
│   of managing the abnormal       │
│   situation                      │
└─────────────────────────────────┘
              │
              ▼
┌─────────────────────────────────┐
│   Selection of second method of  │──63
│   managing the abnormal          │
│   situation                      │
└─────────────────────────────────┘
              │
              ▼
┌─────────────────────────────────┐
│   Perform the second method      │──64
│   of managing the abnormal       │
│   situation                      │
└─────────────────────────────────┘
```

# FIG. 5b

FIG. 6

Determine parameters ($C_b$, $R_b$)
defining circular region
covering the abnormal situation region
— 80a

Identify a transmitted beam
corresponding to the circular region
— 81a

Reconfigure
the identified beam
— 82a

# FIG. 7a

EP 3 293 891 B1

```
┌─────────────────────┐                                    ┌─────────────────────┐
│   Determine  C_b    │                                    │   Determine  R_b    │
└─────────────────────┘                                    └─────────────────────┘
           │                                                          │
           │                                                          │
    Yes   ╱ ╲                                              Yes      ╱ ╲
  ┌──────╱   ╲                                           ┌─────────╱   ╲
  │     ╱ |C_b - C_1| < C_min ? ╲                        │        ╱ R_b < R_bmin ? ╲
  │     ╲                       ╱                        │        ╲               ╱
  │      ╲   ╱                                           │         ╲   ╱
  │       ╲ ╱ No                                         │          ╲ ╱ No
┌─┴──────┐  │                                          ┌─┴────────┐  │
│C'_1=C_1│  │                                          │R'_1=R_bmin│ │
└────────┘  │                                          └───────────┘ │
           ╱ ╲                                                       ╱ ╲
          ╱   ╲              Yes                                    ╱   ╲            Yes
         ╱ |C_b - C_1| > C_max ? ╲─────────┐                      ╱ R_b > R_bmax ? ╲───────┐
         ╲                       ╱         │                      ╲               ╱        │
          ╲   ╱                            │                       ╲   ╱                   │
           ╲ ╱ No                          │                        ╲ ╱ No                 │
            │                              │                         │                  ┌──┴──────────┐
            │                              │                         │                  │R'_1 = R_bmax│
    ┌───────┴──┐        ┌──────────────────┴──────────────┐  ┌───────┴──────────────┐  └─────────────┘
    │C'_1 = C_b│        │C'_1 = C_1 + C_max exp(j × arg(C_b - C_1))│  │R'_1 = R_b or R'_1 = a×R_b│
    └──────────┘        └─────────────────────────────────┘  └──────────────────────┘
```

## FIG. 7b

```
┌─────────────────────────────────────┐
│        Determine parameters          │
│      defining circular region        │──80b
│  covering the abnormal situation     │
│              region                  │
└─────────────────────────────────────┘
                  │
                  ▼
┌─────────────────────────────────────┐
│       Identify a transmitted beam    │
│     corresponding to the circular    │──81b
│               region                 │
└─────────────────────────────────────┘
                  │
                  ▼
┌─────────────────────────────────────┐
│            Reconfigure               │
│        the identified beam           │──82b
└─────────────────────────────────────┘
                  │
                  ▼
┌─────────────────────────────────────┐
│       Identify a first ring beam     │
│        of the identified beam        │──83b
└─────────────────────────────────────┘
                  │
                  ▼
┌─────────────────────────────────────┐
│      Reconfigure the identified      │
│           first ring beam            │──84b
└─────────────────────────────────────┘
```

# FIG. 7c

FIG. 8a

FIG. 8b

FIG. 8c

FIG. 9a

FIG. 9b

Assess capacity needs of beam covering
the abnormal situation area                          ⎯90

Assess capacity needs of first ring beams
neighboring the beam serving
the abnormal situation area                          ⎯91

Determine whether part or all of
reconfigurable satellite resources and/or
reserved resources are to be re-allocated            ⎯92
to the beam serving the abnormal
situation area

FIG. 9c

Monitor for identifying and localizing the abnormal situations —95

Upon identification of abnormal situation occurrence, reconfigure the network —96

Apply reconfiguration method 1 —96a

Assess validity of method 1 —96b

FIG. 11

EP 3 293 891 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015151372 A1

- EP 3062451 A1

**Non-patent literature cited in the description**

- **MEGIDDO, NIMROD.** Linear-time algorithms for linear programming in R3 and related problems. *SIAM Journal on Computing,* 1983, vol. 12 (4), 759-776
- **WELZL, EMO.** *Smallest enclosing disks (balls and ellipsoids),* 1991

- **MAURER, H.** New Results and New Trends in Computer Science, Lecture Notes in Computer Science. Springer-Verlag, vol. 555, 359-370
- **SHAMOS, M. I. ; HOEY, D.** Closest point problems. *Proceedings of 16th Annual IEEE Symposium on Foundations of Computer Science,* 1975, 151-162